# EUROPEAN PATENT APPLICATION

(11) **EP 4 832 239 A1**
(43) Date of publication of application: **28.10.2026**
(21) Application number: 26174392.6
(22) Date of filing: 24.04.2026
(51) Int. Cl.: H01M 50/627, H01M 50/15, H01M 50/636, H01M 50/645

(54) **SECONDARY BATTERY**

(30) Priority: 24.04.2025 KR 20250053665; 09.12.2025 KR 20250194290; 22.04.2026 KR 20260073216
(71) Applicant: LG Energy Solution, Ltd., Seoul 07335 (KR)
(72) Inventor: LEE, Hyun Hee, 34122 Daejeon (KR); PARK, Sang Joon, 34122 Daejeon (KR); SON, Young Jong, 34122 Daejeon (KR); NOH, Seung Hyun, 34122 Daejeon (KR); SUH, Hyun Jung, 34122 Daejeon (KR)
(74) Representative: Goddar, Heinz J.

(57) **Abstract**

Disclosed herein is a secondary battery comprising: an electrode assembly; a casing into which the electrode assembly is inserted; a cap coupled to the casing and comprising an electrolyte injection port; and an insulating element disposed between the cap and the electrode assembly. The insulating element comprises an injection guide facing the electrolyte injection port. The injection guide comprises: a concave portion forming a recess in a first surface of the insulating element facing the cap; and at least one extension flow passage formed at the first surface of the insulating element and/or at a second surface of the insulating element opposite to the first surface, the extension flow passage being in fluid communication with the recess formed by the concave portion to allow an electrolyte to flow therethrough and extending away from the concave portion along the first and second surface, respectively.

## Description

### CROSS-REFERENCE TO RELATED APPLICATION

This application claims priority to Korean Patent Application No. 10-2025-0053665, filed on April 24, 2025, and No. 10-2025-0194290, filed on December 09, 2025, and No. 10-2026-0073216, filed on April 22, 2026, the disclosures of which are incorporated by reference herein in their entirety.

### BACKGROUND

### 1. Technical Field

The present disclosure relates to a secondary battery capable of charging and discharging, and more particularly, to a secondary battery into which an electrolyte may be easily injected.

### 2. Related Art

In recent years, demand for portable electronic devices such as a laptop, a video camera, and a mobile phone has rapidly increased, and the development of an electric vehicle, energy storage battery, robot, and satellite, or the like has been accelerated. Accordingly, research into a high-performance secondary battery capable of repeated charging and discharging has been actively conducted.

Secondary batteries that have currently been commercialized include a nickelcadmium battery, nickel-metal hydride battery, nickel-zinc battery, and lithium secondary battery. Among these batteries, the lithium secondary battery has attracted significant attention because, compared to a nickel-based battery, the lithium secondary battery exhibits little memory effect, and thus allows easy charging and discharging and has a very low self-discharge rate and high energy density.

The lithium secondary battery generally uses a lithium-based oxide as a positive electrode active material and a carbon-based material as a negative electrode active material. In addition, the lithium secondary battery may be provided with some or all of: a positive electrode plate and a negative electrode plate, coated with a positive electrode active material and a negative electrode active material, respectively; an electrode assembly in which the positive and negative electrode plates are disposed with a separator interposed therebetween; and an outer casing configured to seal and accommodate the electrode assembly and an electrolyte.

In addition, depending on a shape of a battery casing, secondary batteries such as the lithium secondary battery may be classified into a can-type secondary battery, in which an electrode assembly is housed in a rigid can (e.g., a metal can), and a pouch-type secondary battery, in which an electrode assembly is housed in a pouch made of a sheet (e.g., an aluminum laminate sheet). In addition, depending on a shape of a rigid/metal can, the can-type secondary battery may be further classified into a cylindrical battery and a prismatic battery.

### SUMMARY

A secondary battery (e.g., a prismatic battery) may be provided with an electrolyte injection port. If the electrolyte injection port is blocked by foreign matter or an internal component, an electrolyte injection speed may decrease, or the electrolyte may flow backward.

The present disclosure provides a secondary battery into which an electrolyte may be easily injected. The present disclosure further provides an electrolyte injection inlet for injecting an electrolyte into a housing of a secondary battery and a cap assembly for use in a secondary battery, which may allow for easily injecting an electrolyte into a secondary battery.

According to an aspect of the present disclosure, there is provided a secondary battery, which may include: an electrode assembly (which may, e.g., include a positive electrode and a negative electrode); a casing into which the electrode assembly is inserted; a cap (e.g., a cap plate) coupled to the casing and including an electrolyte injection port; and an insulating element disposed between the cap and the electrode assembly. The insulating element may include an injection guide facing the electrolyte injection port, and the injection guide may include a concave portion forming a recess in the insulating element (e.g., formed to be recessed in the insulating element), for example in a first surface of the insulating element facing the cap. The concave portion may, e.g., be configured to accommodate an electrolyte. The injection guide may further include an extension flow passage (which may also be referred to as an extension flow path). The extension flow passage may for example be formed at (e.g., on, in and/or below) the first surface of the insulating element and/or at (e.g., on, in and/or below) a second surface of the insulating element opposite to the first surface. The extension flow passage may be in fluid communication with the recess formed by the concave portion to allow the electrolyte to flow therethrough (e.g., may be connected to the concave portion). The extension flow passage may for example extend away from (which may also be referred to herein as outward from) the concave portion along the first and second surface, respectively (e.g., may be configured to extend outward from the concave portion). The extension flow passage may, e.g., form a space through which the electrolyte moves.

The secondary battery as well as its electrode assembly, casing and cap are not particularly limited and may be embodied in various ways, for example as is known in the art.

The secondary battery may be a can-type secondary battery (e.g., having a rigid casing). The secondary battery may in particular be a prismatic secondary battery, i.e., the secondary battery (e.g., its housing formed by the casing and the cap) may for example have, at least substantially, the shape of a prism, in particular a quadrilateral (quadrangular) prismatic (e.g., parallelepiped) shape such as a rectangular prismatic shape (i.e., have, at least substantially, the shape of a rectangular cuboid).

The electrode assembly may for example comprise a positive electrode, a negative electrode and, optionally, a separator arranged therebetween. In some examples, the secondary battery may be a lithium secondary battery, e.g., a lithium-ion secondary battery.

The casing (which may also be referred to as case herein) may, together with the cap coupled thereto, form a housing of the secondary battery. The housing may accommodate the electrode assembly and, optionally, further components of the secondary battery (e.g., one or more current collectors and the like) and may seal off the same from the surroundings of the secondary battery. The casing may have an opening, e.g., for inserting the electrode assembly into the casing. The cap may cover the opening to close (e.g., seal) the casing.

The casing and/or the cap (e.g., the housing as a whole) may be made of (e.g., comprise or consist of) a rigid material, in particular a metal material.

The cap is coupled (e.g., attached) to the casing, for example by welding. The cap may be embodied as a cap plate, for example as a rectangular plate.

The cap may have a first surface (e.g., a first side, face or main surface) facing away from the electrode assembly/facing outwards (which may thus also be referred to as the outer, upper or top surface of the cap and may be exposed to the outside of the housing) and a second surface (e.g., a second side, face or main surface) opposite to the first surface, i.e., facing the electrode assembly/facing inwards (which may thus also be referred to as the inner, lower or bottom surface of the cap and may be exposed to the inside of the housing). The first and second surfaces of the cap may be parallel to each other. The first and second surfaces of the cap, in particular in so far as an orientation with respect to said surfaces is concerned (e.g., "parallel to the first surface of the cap"), may for example refer to the respective surface of a main body (e.g., a base plate, which may, for example be embodied as a flat, e.g., rectangular, plate) of the cap, e.g., without structures protruding from the main body of the cap such as the below described protrusion inserted into the concave portion of the insulating element.

The cap comprises an electrolyte injection port for injecting an electrolyte into the housing of the secondary battery. The electrolyte injection port is not particularly limited and may be embodied in various way, e.g., as is known in the art. The electrolyte injection port may for example be or comprise a hole formed in the cap, e.g., a hole extending through the cap from the first surface of the cap to the second surface of the cap. After injection of the electrolyte, the electrolyte injection port may be sealed, e.g., by means of a sealing plug.

The (electrically) insulating element is disposed between the cap and the electrode assembly. The insulating element may for example be disposed at (e.g., on), and optionally attached to, the second/inner surface of the cap. The insulating element (e.g., at least a portion thereof surrounding the injection guide) may be in fluid-tight (e.g., fluid-proof/fluid-impermeable) contact with the cap (e.g., its second/inner surface), for example so as to avoid electrolyte leaking to between the cap and the insulating element.

The insulating element has a first surface (e.g., a first side, face or main surface) facing the cap/facing away from the electrode assembly (which may also be referred to as its outer, upper or top surface and may be in fluid-tight contact with the second/inner surface of the cap) and a second surface (e.g., a second side, face or main surface) opposite to the first surface (i.e., facing away from the cap/facing towards the electrode assembly), which may also be referred to as its inner, lower or bottom surface and may be exposed to the inside of the secondary battery/the housing. The first and second surfaces of the insulating element may be parallel to each other. At least the first surface of the insulating element may be parallel to the second surface of the cap. The first and second surfaces of the insulating element, in particular in so far as an orientation with respect to said surfaces is concerned (e.g., "parallel to the first surface of the insulating element"), may for example refer to the respective surface of a main body (e.g., a base plate, which may for example be embodied as a flat, e.g., rectangular, plate) of the insulating element, e.g., without the concave portion as well as the recess and (optionally) guide protrusion formed thereby.

A direction from the second surface of the insulating element to the first surface of the insulating element (e.g., perpendicular or substantially perpendicular to the first surface of the insulating element and/or the second surface of the cap) may be referred to as the first, vertical, thickness or height direction herein, without, however, implying any particular orientation of the secondary battery or of components thereof with respect to the direction of gravity as said orientation may vary, e.g., depending on the particular installation and/or use of the secondary battery (e.g., in another entity such as a vehicle). The latter likewise applies to relative geometric terms such as upper/top, lower/bottom and the like used herein, which may for example be used to specify arrangements in relation to the cap with, e.g., the side or surface of the casing (or of the housing/the secondary battery) at which the cap is arranged being referred to as the top (or upper) side or surface of the casing (and of the housing/the secondary battery, respectively). A side or surface of an element, structure or the like facing in the same (or substantially the same) direction as the first/upper surface of the cap may be referred to as an upper (or top) side and surface, respectively, of the respective element/structure and a side or surface of an element, structure or the like facing in the same (or substantially the same) direction as the second/bottom surface of the cap may be referred to as a bottom (or lower) side and surface, respectively, of the respective element/structure.

Additionally or alternatively, a side or surface of an element, structure or the like facing towards an inside (e.g., a center) of the casing of the battery may for example be referred to as an inner side and surface, respectively, of the respective element/structure and a side or surface of an element, structure or the like facing towards an outside (e.g., away from a center) of the casing of the battery may be referred to as an outer side and surface, respectively, of the respective element.

The insulating element may be made of (e.g., comprise or consist of) an electrically insulating material such as plastic. The insulating element may be configured to electrically insulate the electrode assembly from the cap. In other examples, a non-insulating element may be used instead of the insulating element, e.g., as further detailed below.

The insulating element comprises an injection guide that is arranged so as to face the electrolyte injection port of the cap, e.g., such that the injection guide (e.g., the concave portion/recess thereof) at least partially and preferably completely overlaps the electrolyte injection port (e.g., as seen along the first/vertical direction). The injection guide (e.g., the concave portion thereof) may be aligned with the electrolyte injection port, e.g., such that the centers thereof are aligned (e.g., coincide) along the first/vertical direction.

The injection guide may be configured to guide an electrolyte (injected through the electrolyte injection port) into the casing of the secondary battery, e.g., by providing one or more fluid paths for the electrolyte from the electrolyte injection port into the casing. Thereby, the injection guide may facilitate injection of the electrolyte into the housing of the secondary battery.

The injection guide comprises a concave portion (e.g., a concave structure, part or surface) forming a recess (e.g., an indentation, concavity, trough or hollow) in the first surface of the insulating element. The recess may provide a space for receiving (e.g., at least temporarily accommodating), and optionally distributing (e.g., between different flow paths/passages), the electrolyte injected through the electrolyte injection port.

The injection guide further comprises one or more extension flow passages that are in fluid communication with the recess formed by the concave portion to allow the electrolyte to flow from the recess through the respective extension flow passage. Each of the extension flow passages may be embodied as set out below.

As used herein, an extension flow passage may refer to a structure (e.g., a channel structure such as an (open or closed) channel, tube, conduit, duct or the like) that is formed at (e.g., on, in and/or below) the first surface and/or the second surface of the insulating element and provides a fluid path or passageway for the electrolyte to flow therethrough (e.g., from the recess formed by the concave portion into the casing of the secondary battery). An extension flow passage may thus also be referred to as an extension flow path or passageway herein. The extension flow passage may only be formed at the respective surface(s) of the insulating element, i.e., the extension flow passage may be formed such that at least a part of the insulating element remains above and/or below the extension flow passage (as opposed to, e.g., a hole or cutout extending through the insulating element, i.e., all the way from its first surface to its second surface), for example so as to maintain or improve the structural integrity of the insulating element.

A first end (e.g., a proximal end) of the extension flow passage may be in fluid communication with (e.g., be open or otherwise connected to) the recess formed by the concave portion and a second end (e.g., a distal end) of the extension flow passage, opposite to the first end, may be in fluid communication with the interior of the casing of the secondary battery (e.g., the space accommodating the electrode assembly). The extension flow passage may thus provide a fluid path from the recess formed by the concave portion to the interior of the casing.

The extension flow passage (e.g., its major axis or extension) extends (e.g., projects or juts out) away from (e.g., radially away from) the concave portion (e.g., from the recess formed thereby) along the surface(s) of the insulating element at which the extension flow passage is formed. The extension flow passage may extend away from an outer circumference of the concave portion, e.g., in a direction perpendicular or substantially perpendicular to the outer circumference of the concave portion. The extension flow passage may, for example, extend parallel or substantially parallel to the surface(s) of the insulating element at which the extension flow passage is formed.

As used herein, two directions, structures, surfaces or the like being substantially perpendicular (or similar expressions such as substantially orthogonal or being/extending in a substantially perpendicular direction) may for example refer to the directions, structures and surfaces, respectively, being (e.g., extending or projecting) at an angle of between 70° and 110°, in some examples between 80° and 100°, in one example between 85° and 95° and in one example between 88° and 92° to each other. Similarly, two directions, structures, surfaces or the like being substantially parallel (or similar expressions such as being/extending in substantially the same direction) may for example refer to the directions, structures and surfaces, respectively, being (e.g., extending or projecting) at an (acute) angle of between -20° and 20°, in some examples between -10° and 10°, in one example between -5° and 5° and in one example between - 2° and 2° to each other.

According to an aspect of the present disclosure, the extension flow passage may be formed as a depression (e.g., an indentation, recess or lowered part) recessed from (e.g., formed in) the first/outer surface of the insulating element and/or as a depression recessed from the second/inner surface of the insulating element. The extension flow passage may in particular be formed as a groove (e.g., an elongated depression, extending away from the concave portion) recessed from the first/outer surface of the insulating element and/or as a groove recessed from the second/inner surface of the insulating element. The depression or groove may for example be open towards the interior of the casing and the cap, respectively.

Put differently, according to an aspect of the present disclosure, the extension flow path may be formed as a groove recessed from an inner surface of the insulating element that faces the electrode assembly.

According to an aspect of the present disclosure, a depth of the extension flow passage (extension flow path), e.g., of the depression formed thereby, may be 0.05 to 0.75 times, preferably 0.15 to 0.5 times, in some examples 0.2 to 0.4 times a thickness of the insulating element. Put differently, at least 25%, preferably at least 50%, in some examples at least 60% and in one example at least 80% of a thickness of the insulating element may remain above, below and/or between the extension flow passage. The thickness of the insulating element and the depth of the extension flow passage may for example be measured in the first/vertical direction (i.e., the direction from the first surface of the insulating element to the second surface). The aforementioned thickness of the insulating element may for example refer to a thickness of a portion of the insulating element that abuts a distal end (as seen from the concave portion, e.g., a center thereof, i.e., an end facing away from the concave portion) of the extension flow passage (e.g., a thickness of a portion, connected to a longitudinal outer side of the extension flow path, of the insulating element). Additionally or alternatively, the thickness of the insulating element may for example refer to the average thickness of the insulating element and/or a thickness of the main body of the insulating element (e.g., from the first surface to the second surface of the insulating element).

According to an aspect of the present disclosure, the extension flow passage (e.g., a major axis or extension thereof) may extend away from the concave portion (e.g., an outer circumference thereof) radially as seen from a center of the concave portion (e.g., along a straight line extending away from the center of the concave portion in a plane parallel or substantially parallel to the first and/or second surface(s) of the insulating element), for example perpendicular of substantially perpendicular to the outer circumference of the concave portion (which may, e.g., be formed by the side of the concave portion introduced below). In other words, the extension flow path(s) may extend radially from a center of the concave portion.

A direction extending radially away from the center of the concave portion (e.g., the center of its bottom as introduced below) in a plane parallel or substantially parallel to the first surface and/or the second surface of the insulating element may for example be referred to as the radial direction (or radially). A direction extending around the center of the concave portion (e.g., the center of its bottom as introduced below)/perpendicular to the radial direction in the plane parallel or substantially parallel to the first surface and/or the second surface of the insulating element may be referred to as the circumferential or azimuthal direction (or circumferentially or azimuthally).

According to an aspect of the present disclosure, a length of the extension flow passage may be smaller than a diameter of the recess (e.g., an inner diameter, width or physical dimension of the concave portion) formed by the concave portion. For example, the length of the extension flow passage may be 0.1 to 0.9 times, preferably 0.15 to 0.6 times and in some examples 0.15 to 0.45 times the diameter of the recess formed by the concave portion. The length of the extension flow passage may for example be measured between the first/proximal and second/distal ends of the extension flow passage (for example along the corresponding flow path/direction of flow of the electrolyte and/or in a direction radially away from the concave portion and along (e.g., parallel to) the first and/or second surface(s) of the insulating element. The aforementioned diameter of the recess may for example be a smallest diameter of the recess (e.g., smallest inner diameter, width or physical dimension of the concave portion), for example a diameter of or at the bottom of the concave portion. The diameter of the recess or of the concave portion may for example be measured in a plane parallel or substantially parallel to the first surface of the insulating element.

Put differently, according to an aspect of the present disclosure, a length of the extension flow path may be 0.15 to 0.6 times, in some examples 0.15 to 0.45 times, a smallest diameter of the concave portion.

According to an aspect of the present disclosure, the extension flow passage (e.g., the corresponding depression or groove) may be formed at (e.g., in and/or on) the first/outer surface of the insulating element, e.g., so as to be open to the second/inner surface of the cap (which may form a boundary or wall bordering/delimiting the extension flow passage). The injection guide may further comprise a connection hole that extends from the extension flow passage (e.g., its second/distal end) through the insulating element toward the electrode assembly (e.g., from the first surface to the second surface of the insulating element). The extension flow passage (e.g. its second/distal end) may be in fluid communication with the interior of the casing via the connection hole (which may be open towards the interior of the casing, e.g., at the second surface of the insulating element).

Put differently, according to an aspect of the present disclosure, the extension flow path may be formed on an outer surface of the insulating element that faces the cap plate, and the injection guide (which may be connected to the extension flow path) may further include a connection hole opened toward the electrode assembly.

According to an aspect of the present disclosure, the connection hole may be or may form part of (e.g., may be formed by) a discharge opening (e.g., a hole or a plurality of holes or other fluid-permeable structure) that is formed in the insulating element (e.g., extending therethrough from the second to the first surface). The extension flow passage may provide a fluid connection between (e.g., may connect) the concave portion (e.g., the recess formed thereby) and the discharge opening.

The discharge opening (which may form or be part of an exhaust portion of the insulating element) may be configured to allow for a discharge (e.g., flow) of fluid, in particular gas, therethrough, e.g., in the event of an increase of internal pressure within the secondary battery. The discharge opening may face a vent structure (e.g., a vent hole sealed by a suitable vent element, which may for example be configured to open at a preset pressure) formed in the cap.

Put differently, according to an aspect of the present disclosure, the insulating element may further include an exhaust portion positioned below a vent hole formed in the cap plate and having a discharge opening, and the extension flow passage/path may connect the concave portion and the discharge opening.

According to an aspect of the present disclosure, the extension flow passage (irrespective of whether it is formed at the first and/or second surface(s) of the insulating element and irrespective of whether it connected to a connection hole or discharge opening as described above) may comprises a first (e.g., proximal) portion (which may, e.g., extend away from and in some examples abut the concave portion) having a width that increases (e.g., gradually and in particular linearly) as the extension flow passage extends away from the concave portion (e.g., a width that increases as a distance from the concave portion increases). Put differently, the first portion (which may also be referred to as the first extension portion herein) of the extension flow passage may be tapered so as to widen (e.g., taper or fan out) in the direction away from the concave portion. The first portion of the extension flow passage may for example have the shape of a circular sector. The width of the extension flow passage may for example be measured in a direction perpendicular to the length and the depth of the extension flow passage, for example perpendicular to a direction from the first/proximal end to the second/distal end of the extension flow passage (e.g., perpendicular to the flow path) and along (e.g., parallel to) the first and/or second surface(s) of the insulating element (e.g., in the azimuthal direction).

Optionally, the extension flow passage may comprise a second (e.g., distal) portion having a uniform width (e.g., a width that remains constant as the extension flow passage extends away from the concave portion). The first portion of the extension flow passage may be arranged between its second portion and the concave portion. In one example, the second portion (which may also be referred to as second extension portion herein) having the uniform width may connect the first portion of the extension flow passage and the connection hole, in particular the extension flow passage and the discharge opening.

Put differently, according to an aspect of the present disclosure, the extension flow passage/path may include a first extension portion having a width that increases as a distance from the concave portion increases, and a second extension portion having a uniform width (and, e.g., connecting the first extension portion and the discharge opening).

According to an aspect of the present disclosure, a cross-sectional area (e.g., in a plane parallel to the first/outer surface of the insulating element) of the recess formed by the concave portion may gradually (e.g., linearly) decrease toward the electrode assembly (e.g., over some or all of the depth of the recess). Put differently, the recess may be tapered and may for example have the shape of a truncated cone (frustrum). The cross-sectional area of the recess at the first surface of the insulating element may, for example, be between 5 % and 200%, in some examples between 20% and 100% larger than at a bottom/bottom surface of the recess (at its far side as seen from the first surface).

Put differently, according to an aspect of the present disclosure, an internal cross-sectional area of the concave portion may gradually decrease toward the electrode assembly.

According to an aspect of the present disclosure, the concave portion may comprise at least one side hole connecting the recess formed by the concave portion and the extension flow passage (e.g., a respective side hole for each of the extension flow passages connecting the respective extension flow passage to the recess, wherein each of said side hole may be embodied as set out below). The extension flow passage may be in fluid communication with the recess formed by the concave portion via the side hole of the concave portion. The extension flow passage may abut the side hole and may extend away from the side hole (and the concave portion) along the first and second surface, respectively.

Put differently, according to an aspect of the present disclosure, the injection guide may include at least one side hole configured to connect the concave portion and the extension flow passage/path.

According to an aspect of the present disclosure, the concave portion may a comprise a bottom (e.g., forming the bottom, for example bottom surface or bottom wall, of the recess) and a side (e.g., forming a side surface or side wall of the recess) connecting the bottom to the insulating element, in particular to the first surface of the insulating element (e.g., extending from the bottom up to the level of the first surface of the insulating element). The bottom may for example be embodied as or form an (e.g., flat or inclined) bottom plate. The side may for example be embodied as or form a side wall. The side may extend around the bottom (e.g., azimuthally), e.g., at an outer circumference thereof. The side may have the shape of an open truncated cone, whose lower/far end (as seen from the first surface of the insulating element) may be closed by the bottom. The side of the concave portion may separate the extension flow passage from the recess.

According to an aspect of the present disclosure, the side hole may pass through the side of the concave portion. The side hole may be a hole (e.g., an opening or cutout) in the side of the concave portion, through which the extension flow passage may be in fluid communication with the recess formed by the concave portion. The side hole may extend through the side of the concave portion radially as seen from the center of the concave portion.

Put differently, according to an aspect of the present disclosure, the concave portion may include a bottom (e.g., a bottom plate) and a side (e.g., a side surface) configured to connect the bottom plate/bottom to the insulating element. The side hole may pas through the side surface/side. According to an aspect of the present disclosure, the side hole may comprise a first portion passing through the side of the concave portion and one or both of a second portion and a third portion as set out below. The second and/or third portion of the side hole may abut its first portion and may together with the first portion form a single continuous hole (e.g., without any stay or other separating structure or part of the insulating element remaining therebetween). The first portion of the side hole may be formed in a portion of the side of the concave portion that protrudes from the second surface of the insulating element (e.g., in the direction towards the electrode assembly), e.g., a portion that does not overlap with or is not formed by a main body (which may, e.g., be embodied as a flat plate) of the insulating element.

The second portion of the side hole may form a depression (e.g., an indentation, recess or groove) in the second surface of the insulating element connecting to and/or forming the extension flow passage (e.g., in part or in its entirety). The extension flow passage may for example be formed in at least the second surface of the insulating element in such examples. The second portion of the side hole and the extension flow passage (e.g., at least a part thereof) may collectively form (e.g., be portions of) a same (e.g., continuous and optionally of same depth) depression (e.g., groove) in the second surface of the insulating element. The second portion of the side hole may be formed in a portion of the side of the concave portion that is arranged between the first and second surfaces of the insulating element, e.g., a portion that overlaps with or is formed by the main body of the insulating element (rather than protrudes from the second surface as the portion in which the first portion of the side hole is formed).

Put differently, according to an aspect of the present disclosure, the side hole may include a first portion configured to pass through the side surface in a thickness direction of the side surface (e.g., perpendicular to the side surface/side) and a second portion recessed in a thickness direction of the insulating element (e.g., in the first/vertical direction).

The third portion of the side hole may form a cutout (e.g., a notch, slot or indent) in the bottom of the concave portion recessed inward (e.g., from an outer circumference of the bottom) towards a center of the bottom. The cutout may extend through the bottom of the concave portion (in the first/vertical direction). In other words, the side hole may comprise a first portion passing through the side of the concave portion and a third portion passing through the bottom of the concave portion (i.e., the side hole may extend from the side into the bottom of the concave portion).

Put differently, according to an aspect of the present disclosure, a bottom groove (cutout), connected to the side hole and recessed inward from a side end of the bottom plate, may be formed in the concave portion.

According to an aspect of the present disclosure, a (e.g., average or maximum/greatest) thickness (or width) of the side of the concave portion (e.g., measured perpendicular to an inner surface of the side abutting the recess and/or radially as seen from the center of the concave portion) may be 1.25 to 5 times, in some examples 1.25 to 2.45 times, a thickness of the insulating element (e.g., a thickness of a portion of the insulating element abutting the distal end of the extension flow passage as seen from the concave portion), which may, e.g., be measured in the first/vertical direction.

Put differently, according to an aspect of the present disclosure, a greatest width of the side surface/side may be 1.25 to 5 times, optionally 1.25 to 2.45 times, a thickness of a portion of the insulating element that is connected to a longitudinal outer side of the extension flow path.

According to an aspect of the present disclosure, the (e.g., average or greatest/maximum) thickness (or width) of the side of the concave portion may additionally or alternatively be between 1.02 mm and 3.5 mm in some examples between 1.02 mm and 1.82 mm. Put differently, a greatest width of the side surface may be 1.02 mm to 3.5 mm, in some examples 1.02 mm to 1.82 mm.

According to an aspect of the present disclosure, the bottom (e.g., bottom plate) of the concave portion may comprise an inclined bottom surface (facing towards the recess/the cap, which may also be referred to as the second bottom surface) that is positioned between a center of the bottom and the side of the concave portion, e.g., abutting the side of the concave portion. The inclined bottom surface may be inclined (e.g., at an inclination angle of between 1 degree and 30 degrees, in some examples between 2 degrees and 15 degrees) with respect to a surface of the cap facing the insulating element (i.e., the second/inner surface of the cap), in particular so as to extend away from the (second/inner) surface of the cap (e.g., be inclined downward/towards the electrode assembly) when going in the direction from the center of the bottom towards the side of the concave portion (e.g., such that a gap between the inclined bottom surface and the cap and/or a distance between the inclined bottom surface and the second/inner surface of the cap widens in the direction from the center of the bottom towards the side of the concave portion).

The inclined bottom surface may partially or completely extend around (e.g., surround or enclose) the center of the bottom (e.g., the flat bottom surface introduced below), e.g., in the azimuthal direction. The inclined bottom surface may for example have an annular shape extending around the center of the bottom. The inclined bottom surface may, for example, have the shape of a truncated cone protruding in the direction of the first surface of the insulating element from an inner circumference of the side of the concave portion.

In some examples, the inclined bottom surface may comprise a plurality of inclined surfaces (which may also be referred to as second portions of the bottom herein), which may be arranged around the center of the bottom (e.g., distributed equidistantly) and may be separated from each other, e.g., by non-inclined/flat surfaces (e.g., extending parallel to the second/inner surface of the cap), which may also be referred to as first portions of the bottom herein. In some examples, the inclined bottom surface (e.g., each of the inclined surfaces) may form an inclined depression connected to the extension flow passage, e.g., as further detailed below.

According to an aspect of the present disclosure, the bottom of the concave portion may optionally further comprises a flat bottom surface (which may also be referred to as the first bottom surface) parallel to said surface of the cap (i.e., the inner/second surface of the cap), wherein the inclined bottom surface may be positioned between the flat bottom surface and the side of the concave portion (e.g., so as to partially or completely extend around the flat bottom surface, e.g., azimuthally). Along the flat bottom surface, a gap between the bottom (i.e., the flat bottom surface) and the cap and/or a distance between the bottom (i.e., the flat bottom surface) and the second/inner surface of the cap may remain constant.

Put differently, according to an aspect of the present disclosure, the bottom plate/bottom of the concave portion may include: a first bottom surface parallel to a lower surface of the cap plate/cap; and a second bottom surface positioned outward of the first bottom surface and formed to be inclined downward with respect to the lower surface of the cap plate/cap.

In other examples, the entire bottom may of the concave portion may be flat and, e.g., extend parallel to the first surface of the insulating element and/or parallel to the second surface of the cap (i.e., may not comprise an inclined bottom surface).

According to an aspect of the present disclosure, the bottom may comprise a portion (which may also be referred to as a tapered portion) having a thickness (e.g., measured in the first/vertical direction) gradually (e.g., linearly) decreasing toward the side of the concave portion (e.g., decreasing when going in the direction from the center of the bottom towards the side of the concave portion). The tapered portion of the bottom may form the inclined bottom surface of the bottom (which additionally or alternatively may also be formed by a non-tapered, but inclined portion of the bottom of uniform thickness). The tapered portion may partially or completely extend around (e.g., surround or enclose) the center of the bottom. The tapered portion of the bottom may be formed as a truncated cone, e.g., as described above for the inclined bottom surface. The thickness of the bottom may for example decrease by between 5% and 80%, in some examples by between 10% and 50% in the tapered portion.

Put differently, according to an aspect of the present disclosure, the bottom plate/bottom of the concave portion may include a portion having a thickness gradually decreasing toward a radial outer side.

According to an aspect of the present disclosure, the bottom of the concave portion may comprise one or more depressions (in a first/outer surface of the bottom facing towards the recess/the cap) that are connected to (and, e.g., aligned with) a respective one of the extension flow passage(s), for example via a respective side hole, which the depression may abut. Each of the depressions may for example be embodied as a grooves in the first surface of the bottom of the concave portion. Each of the depressions may widen (for example in the plane parallel to the first surface of the insulating element), e.g. fan or taper out, when going in the direction from the center of the bottom towards the side of the concave portion and may, e.g., have the shape of a circular sector. Each of the depressions may extend away from a center or center portion (e.g., the aforementioned flat bottom surface) of the bottom towards and preferably up to the side (e.g., the respective side hole), e.g., such that the depression and the respective extension flow passage extend along a same line in the direction away from the center of the bottom/concave portion. The depressions may be arranged (e.g., distributed equidistantly) around the center of the bottom, e.g., along the azimuthal direction. The depressions may be separated from each other, e.g., by non-depressed portions of the bottom.

According to an aspect of the present disclosure, the one or more depressions are inclined (e.g., with respect to the second/inner surface of the cap), in particular so as to deepen (e.g., relative to the abutting portion(s) of the bottom) towards the respective extension flow passage (e.g., when going in the direction from the center of the bottom towards the side of the concave portion). In other words, a depth (e.g., in the first/vertical direction) of the depression may increase towards the respective extension flow passage/the side of the concave portion. Each depression may form an inclined bottom surface or an inclined surface of an inclined bottom surface as introduced above. Additionally or alternatively, each depression may be formed by a tapered portion of the bottom (i.e., a portion having a thickness gradually decreasing toward the side of the concave portion).

The bottom of the concave portion may comprise a plurality of depressions (e.g., as described above), in particular inclined depressions, which may be separated from each other by (e.g., arranged alternatingly with) non-depressed and/or non-inclined portions of the bottom (e.g., parallel to the first surface of the insulating element and/or parallel to the second surface of the cap).

Put differently, according to an aspect of the present disclosure, the concave portion may include a bottom plate/bottom and a side surface/side configured to connect the bottom plate/bottom to a first surface of the insulating element that faces the cap plate/cap. The bottom plate/bottom may include a plurality of first portions parallel to the first surface and a plurality of second portions inclined with respect to the first surface, wherein the first portions and the second portions may be alternately arranged. A thickness of the second portion may gradually decrease toward a radial outer side of the concave portion in some examples.

According to an aspect of the present disclosure, the side of the concave portion may be inclined (e.g., extend at an angle) with respect to a surface of the cap facing the insulating element (e.g., the second/inner surface of the cap) and/or with respect to the first/outer surface of the insulating element. An inclination angle between the side of the concave portion and a portion of said surface of the cap abutting the side of the concave portion may for example be 25 to 75 degrees, in one example 35 to 65 degrees. The side may for example have the shape of a truncated cone with an opening angle between 15 degrees and 65 degrees, in some examples between 25 degrees and 55 degrees.

Put differently, according to an aspect of the present disclosure, the side surface/side may be formed to be inclined with respect to a lower surface of the cap plate/cap, and an inclination angle between a portion of the side surface/side that is oriented toward an inner side of the concave portion and a portion of the lower surface of the cap plate/cap that faces the concave portion may be 25 to 75 degrees.

According to an aspect of the present disclosure, a protrusion (which may also be referred to as lower protrusion) inserted into the concave portion (e.g., inserted into the recess formed by the concave portion) is formed on the cap (e.g., protrudes from the second/inner surface thereof). The protrusion may for example have the shape of a truncated cone. The electrolyte injection port may be arranged at the protrusion (e.g., at a center thereof), e.g., in a tip (for example an end face (inner/lower face) or far/distal end) of the protrusion as seen from the second surface of the cap.

An accommodation space (e.g., a gap or cavity) may be formed between the bottom of the concave portion and the protrusion. Put differently, the protrusion on the cap may be spaced apart from the bottom of the concave portion (e.g., not be in contact therewith). The accommodation space may allow the electrolyte to flow therethrough, e.g., from the electrolyte injection port towards the extension flow passage(s). The electrolyte injection port may open into the accommodation space (which may, e.g., abut an inner end or opening of the electrolyte injection port).

Put differently, according to an aspect of the present disclosure, a lower protrusion inserted into the concave portion may be formed on the cap plate/cap. An accommodation space through which an electrolyte moves may be formed between the bottom plate/bottom and the lower protrusion.

According to an aspect of the present disclosure, a height of the accommodation space (e.g., measured along the first/vertical direction) between the protrusion and the bottom of the concave portion (e.g., a distance or gap between the protrusion and the bottom) may gradually (e.g., linearly) increase when going in a direction from a center of the bottom toward the side of the concave portion (e.g., towards the extension flow passage(s)). For example, the bottom of the concave portion may comprise an inclined bottom surface, a tapered portion and/or depression(s) as set out above, which may be arranged so as make the height of the accommodation space increase accordingly (e.g., with the inclined bottom surface being inclined with respect to the tip (e.g., the end face/inner face) of the protrusion, for example so as to extend away therefrom when going in the direction from the center of the bottom towards the side of the concave portion).

Put differently, according to an aspect of the present disclosure, a height of the accommodation space may be formed to gradually increase from an inner side toward an outer side.

According to an aspect of the present disclosure, a height (e.g., a smallest height) of the accommodation space may be 0.25 to 4 times a height (thickness) of the lower protrusion (with both, e.g., being measured in the first/vertical direction).

According to an aspect of the present disclosure, a distribution space may be formed between the protrusion on the cap (e.g., a side of the protrusion) and the side of the concave portion. The side of the concave portion may for example be spaced apart from the protrusion on the cap in a direction away from (e.g., radially away from) the center of the concave portion or the center of the bottom of the concave portion The distribution space may for example be formed in an annular shape around the accommodation space (e.g., so as to completely surround the accommodation space). The distribution space may provide a fluid connection from the accommodation space towards the extension flow passage (e.g., a fluid connection from the accommodation space to the side hole in fluid communication with the extension flow passage). Put differently, according to an aspect of the present disclosure, a distribution space in an annular shape may be formed between the lower protrusion and the concave portion, and connect the accommodation space and the side hole.

The distribution space may be higher than the accommodation space in a direction from the bottom of the concave portion to the protrusion (e.g., in the first/vertical direction), for example due to the protrusion on the cap having a smaller diameter than the recess formed by the concave portion and/or sides of the protrusion and the concave portion being inclined at different inclination angles for the gap. A height (e.g., an average or maximum/greatest height) of the distribution space may for example be between 1.1 times and 5 times, in some examples between 1.5 times and 3 times a height (e.g., the average and maximum/greatest height, respectively) of the accommodation space.

According to an aspect of the present disclosure, the concave portion may comprise a central hole (which may also be referred to as internal hole herein) that is formed in the bottom of the concave portion (e.g., at the center of the bottom, in the flat bottom surface of the bottom and/or in the inclined bottom surface of the bottom). The central hole may extend through the bottom of the concave portion and may provide a fluid connection between the recess formed by the concave portion and the interior of the casing (e.g., open towards the electrode assembly). The central hole may be separated from the extension flow passage(s) and/or the side hole(s) by the bottom of the concave portion surrounding the central hole. The central hole may face the electrolyte injection port, e.g., at least partially overlap therewith and preferably be aligned therewith such that the respective centers lie along a same line in the first/vertical direction.

Put differently, according to an aspect of the present disclosure, the injection guide may further include an internal hole formed in the bottom plate/bottom of the concave portion.

According to an aspect of the present disclosure, a radial extent (which may also be referred to as a bottom gap herein) of the bottom between an outer edge (e.g., outer circumference, rim or border) of the central hole and an outer end (e.g., outer circumference or border) of the bottom abutting the side of the concave portion may be greater than a diameter (e.g., inner diameter, width or physical dimension) of the central hole (e.g., in a plane parallel or substantially parallel to the first and/or second surface(s) of the insulating element). The aforementioned radial extent of the bottom may for example be measured in the radial direction (i.e., a direction radially away from the center of the concave portion or bottom).

Put differently, according to an aspect of the present disclosure, a bottom gap between an outer end of the internal hole and an outer end of the bottom plate/bottom of the concave portion may be formed to be greater than a diameter of the internal hole.

According to an aspect of the present disclosure, the radial extent of the bottom (e.g., a bottom gap between an outer end of the internal hole and an outer end of the bottom plate/bottom) may be 1.05 to 3.5 times, in some examples 1.2 to 3.5 times, preferably 1.05 to 1.8 times and in one example 1.2 to 1.8 times a diameter of the central hole/internal hole.

According to an aspect of the present disclosure, the radial extent of the bottom/bottom gap may (additionally or alternatively) be 3.5 mm to 16.5 mm, preferably 3.5 mm to 12.5 mm, in one example 8.5 mm to 16.5 mm and in one example 8.5 mm to 12.5 mm.

According to an aspect of the present disclosure, a first spacing protrusion (e.g., a protruding rim or projection) may be formed on a second surface of the bottom of the concave portion at an outer circumference of the central hole (e.g., on a surface of the concave portion opposite to the recess). The second surface (or inner, bottom or lower surface) of the bottom faces toward the electrode assembly/faces away from the cap (i.e., faces in (at least substantially) the same direction as the second surface of the insulating element). The first spacing protrusion may for example be formed on the guide protrusion introduced below (e.g., on a second/lower/bottom surface thereof facing the electrode assembly). The first spacing protrusion may extend partially or completely around the outer circumference of the central hole (e.g., have an annular shape). In some examples, the first spacing protrusion may comprise a plurality of segments (individual protrusions, e.g., between 3 and 10 segments) that are arranged (e.g., distributed equidistantly) along the outer circumference of the central hole and, e.g., separated from each other by gaps (for example notches or cutouts) therebetween. The first spacing protrusion protrudes from the second surface of the bottom (for example perpendicularly or substantially perpendicularly to the second surface), e.g., toward the electrode assembly.

According to an aspect of the present disclosure, the concave portion (e.g., the bottom and the side thereof) forms a guide protrusion (which may also be referred to as guide protrusion portion herein) on the second surface of the insulating element protruding (from the second surface) toward the electrode assembly (i.e., away from the cap). The guide protrusion on the second surface may form a corresponding counterpart (e.g., structure) to the recess formed by the concave portion on the first surface of the insulating element (e.g., the formation of the recess on the first surface may result in or be associated with the formation of the guide protrusion on the first surface, for example by indentation or depression of the insulating element). The side of the concave portion may form a side wall or side surface of the guide protrusion (wherein side holes in the side of the concave portion, if present, may thus form holes in the side wall or side surface of the guide protrusion). The bottom of the concave portion may form a tip of the guide protrusion (for example an, e.g., flat or inclined, end face facing toward the electrode assembly, which may also be referred to as the inner, bottom or lower face or surface of the guide protrusion). The guide protrusion may for example have the shape of a truncated cone. The central hole (e.g., a lower or inner end thereof) may be disposed at the tip of the guide protrusion (e.g., at a center thereof).

Put differently, according to an aspect of the present disclosure, a guide protrusion portion (guide protrusion) configured to protrude toward the electrode assembly may be formed on an opposite surface of the concave portion (e.g., a surface opposite to the recess formed by the concave portion/opposite to the first surface of the insulating element).

According to an aspect of the present disclosure, the first spacing protrusion (formed at the outer circumference of the central hole) may be formed at the tip (e.g., on the end face) of the guide protrusion.

Put differently, according to an aspect of the present disclosure, a spacing protrusion (first spacing protrusion) may be formed on a lower portion of the guide protrusion portion (guide protrusion) and disposed adjacent to a lower end of the internal hole.

According to an aspect of the present disclosure, the extension flow passage (which may, e.g., be formed at the first surface of the insulating element but in some examples additionally or alternatively also at the second surface of the insulating element) may extend (e.g., radially) away from a base (e.g., upper end) of the guide protrusion where the guide protrusion meets (e.g., abuts or connects to) the second surface of the insulating element (e.g., meets the main body of the insulating element). The extension flow passage may for example extend away from an outer circumference of the base of the guide protrusion, e.g., perpendicular or substantially perpendicular to the outer circumference of the base.

Put differently, according to an aspect of the present disclosure, a guide protrusion portion configured to protrude toward the electrode assembly may be formed on an opposite surface of the concave portion (e.g., opposite to the recess formed by the concave portion/at the second surface of the insulating element). The extension flow passage/path may be connected to an upper end of the guide protrusion portion where the guide protrusion portion and a lower surface (second surface) of the insulating element meet, and may extend outward (e.g., away) from the guide protrusion portion.

According to an aspect of the present disclosure, the injection guide may comprise a plurality of the extension flow passages, e.g., at least a first extension flow passage (first extension flow path) and a second extension flow passage (second extension flow path), in some examples at least three extension flow passages (e.g., between 3 and 20 extension flow passages) and in some examples at least four extension flow passages (e.g., between 4 and 10 extension flow passages, in one example between 6 and 8 extension flow passages). Each of the extension flow passages may be formed at one or both of the first and second surfaces of the insulating element (extending away from the concave portion along the respective surface(s)) and may for example be embodied as described above (or below).

According to an aspect of the present disclosure, the plurality of extension flow passages may be distributed (e.g., equidistantly and/or equiangularly) along an outer circumference of the concave portion, i.e., may be arranged at different (e.g., equidistant and/or equiangular) positions/azimuthal angles at the outer circumference of the concave portion (e.g., of the side thereof). The extension flow passages may for example be arranged symmetrically along the outer circumference of the concave portion (e.g., symmetrically about the center of the concave portion).

According to an aspect of present disclosure, the injection guide may comprise at least one extension flow passage formed at the first surface of the insulating element (which may, e.g., connect to a connection hole and in particular a discharge opening in the insulating element as described above) and at least one extension flow passage, preferably a plurality of extension flow passages, formed at the second surface of the insulating element. The extension flow passage(s) at the first surface may be arranged at different positions than (or at same positions as) the extension flow passage(s) at the second surface.

According to an aspect of the present disclosure, the injection guide may include a plurality of the extension flow passages/paths, and the extension flow paths may extend radially from a center of the concave portion (e.g., may extend away from the concave portion radially as seen from a center of the concave portion).

According to an aspect of the present disclosure, a length of the extension flow path may be 0.4 to 1.5 times, in some examples 0.8 to 1.2 times, a diameter of the internal hole (e.g., the central hole). The internal hole may, e.g., be formed at the bottom of the concave portion.

According to an aspect of the present disclosure, a length of the extension flow path may be 0.7 to 1.6 times a width of the extension flow path.

According to an aspect of the present disclosure, a length of the extension flow path may be 1.5 mm to 6 mm, in some examples 2 mm to 6 mm, and/or a width of the extension flow path may be 2.5 mm to 6.5 mm.

According to an aspect of the present disclosure, a depth of the extension flow path may be 0.02 to 0.35 times a length of the extension flow path.

According to an aspect of the present disclosure, a depth of the extension flow path may be 0.1 mm to 0.5 mm.

According to an aspect of the present disclosure, the diameter (e.g., as defined above) of the recess formed by the concave portion may be 1.5 to 6.5 times, in some examples 1.5 to 6 times, a diameter (e.g., an inner diameter, width or physical dimension) of the electrolyte injection port (e.g., measured in a plane parallel or substantially parallel to the first surface of the insulating element and/or to the second surface of the cap).

Put according to an aspect of the present disclosure, a diameter (e.g., a smallest diameter) of the concave portion, in particular an inner diameter (e.g., smallest inner diameter) of the concave portion, may be 1.5 to 6.5 times, in some examples 1.5 to 6 times, a diameter of the electrolyte injection port.

According to an aspect of the present disclosure, the diameter, e.g., a smallest diameter, of the concave portion (e.g., the diameter or smallest diameter of the recess) may be 7 mm to 16.5 mm, in some examples 9 mm to 16.5 mm.

According to an aspect of the present disclosure, a depth of the concave portion (for example a depth of the recess formed by the concave portion, e.g., from the first surface of the insulating element abutting the concave portion to the bottom of the concave portion, e.g., a greatest depth to the lowermost point on the bottom) may be 0.4 to 2.1 times, in some examples 1.02 to 2.1 times, a thickness of the insulating element (e.g., as defined above). The depth of the concave portion/recess may, e.g., be measured in the first/vertical direction.

According to an aspect of the present disclosure, a depth (e.g., a greatest depth) of the concave portion (e.g., a depth or greatest depth of the recess) may be 0.5 mm to 2.4 mm.

According to an aspect of the present disclosure, the injection guide may further comprise a second spacing protrusion (which may also be referred to as extension protrusion herein) at a distal end (as seen from the concave portion) of the extension flow passage. The second spacing protrusion (which may, e.g., be a protruding rim, jut, nose or projection) may protrude from the second surface of the insulating element (e.g., the portion thereof abutting the second spacing protrusion) toward the electrode assembly/away from the first surface of the insulating element, e.g., along the first/vertical direction. The first spacing protrusion, if present, may for example protrude at least as far as and preferably farther from the second surface of the insulating element than the second spacing protrusion. Put differently, a tip of the second spacing protrusion (e.g., a far/distal end thereof as seen from the second surface of the insulating element) may be at most as far from and preferably closer to the second surface of the insulating element as/than the tip of the second spacing protrusion. The second spacing protrusion may extend (e.g., along the azimuthal direction) along the entire width of the extension flow passage (but may, e.g., be separated from second spacing protrusion(s) at the other extension flow passage(s) by a gap, i.e., may not extend completely around the concave portion).

Put differently, according to an aspect of the present disclosure, the injection guide may further include an extension protrusion (second spacing protrusion) configured to protrude from a longitudinal outer side of the extension flow passage/path toward the electrode assembly.

According to an aspect of the present invention, the insulating element may comprise a buffer protrusion protruding toward the electrode assembly (e.g., from the second surface of the insulating element). The buffer protrusion may be configured to support the electrode assembly (for example to buffer, stop, retain, hold and/or fix the electrode assembly), e.g., permanently (for example to buffer or dampen vibrations) or temporarily (for example in case the electrode assembly moves towards the insulating element/the cap, e.g., as a result of an external force or impact on the secondary battery). The buffer protrusion may be in contact with the electrode assembly (e.g., permanently) or may be configured to come in contact (e.g., temporarily) with the electrode assembly (for example when the electrode assembly moves as a result of an external force or impact). The buffer protrusion may be spaced apart from the injection guide (e.g., the concave portion and the extension flow passage(s)), which may for example be arranged in a center portion of the insulating element, whereas the buffer protrusion may for example be arranged in an edge portion of the insulating element (e.g., at or adjacent to a short edge of the insulating element).

Put differently, according to an aspect of the present disclosure, the insulating element may further include a buffer protrusion configured to protrude toward the electrode assembly and support the electrode assembly.

According to an aspect of the present invention, the buffer protrusion may protrude toward the electrode assembly from an edge of the insulating element (e.g., a short edge of the insulating element, which may for example be embodied as a rectangular plate), for example along, and optionally in contact with, a side wall of the casing. The buffer protrusion may extend along said entire edge of the insulating element. In some examples, the insulating element may comprise a pair of buffer protrusions arranged at opposite (e.g., short) edges of the insulating element.

According to an aspect of the present disclosure, an outer recess (which may also be referred to as outer groove) may be formed in the first surface of the insulating element at a portion of the insulating element formed with the buffer protrusion. The outer recess may extend into the buffer protrusion (e.g., from the first surface to beyond the second surface of the insulating element), for example such that the buffer protrusion is at least partially hollow. The outer recess may for example extend up to, but not through a tip (e.g., an end or lower face) of the buffer protrusion (i.e., a bottom of the outer recess may form the tip of the buffer protrusion). The outer recess may be formed in the shape of an elongated slit. The outer recess may extend over substantially the entire length (e.g., largest physical dimension in a plane parallel to the first surface of the insulating element) of the buffer protrusion, e.g., over at least 70%, in some examples at least 80% thereof.

Put differently, according to an aspect of the present disclosure, an outer groove (outer recess) may be formed, in the insulating element, on an outer side of a portion formed with the buffer protrusion.

According to an aspect of the present disclosure, the buffer protrusion may comprise a flexible (e.g., elastically deformable and in particular elastically compressible) portion. The flexible portion may be configured to be elastically deformed (e.g., elastically compressed) by the electrode assembly (e.g., during impact of the electrode assembly on the buffer protrusion and/or when the electrode assembly presses against the buffer protrusion, e.g., the tip thereof). The flexible portion may for example be embodied as a flexible corrugated structure (e.g., as or similar to a flexible corrugate pipe). The corrugated structure may for example comprise a plurality of corrugations (e.g., folds, grooves and/or ridges), which may form a wave-like or ribbed structure and may, e.g., be arranged so as to achieve a desired flexibility of the flexible portion and/or to allow for elastic deformation thereof.

Put differently, according to an aspect of the present disclosure, the buffer protrusion may include a flexible corrugated pipe.

According to an aspect of the present disclosure, the buffer protrusion may comprise a buffer space (e.g., an internal buffer space) configured to absorb impact (e.g., by elastic deformation of the buffer protrusion around the buffer space). The buffer space may be provided in addition to or instead of the outer recess described above. The buffer protrusion may enclose the buffer space, e.g. such that the buffer space forms a closed cavity or hollow within the buffer protrusion (as opposed to the outer recess which is open towards the first surface of the insulating element). The buffer space may be provided at the tip of the buffer protrusion (e.g., below the outer recess, if present). The portion of the buffer protrusion around the buffer space may, e.g., be referred to as an electrode support portion herein and may be in contact with or configured to come in contact with the electrode assembly.

Put differently, according to an aspect of the present disclosure, an electrode support portion configured to protrude toward the electrode assembly may be formed at an inner end portion of the buffer protrusion (e.g., protruding from a bottom of the outer recess), and a buffer space configured to absorb impact may be formed between the electrode support portion and the buffer protrusion.

According to an aspect of the present disclosure, the extension flow path may include a first extension flow passage/path and a second extension flow passage/path formed on different surfaces of the insulating element.

According to an aspect of the present disclosure, the first extension flow path and the second extension flow path may be formed on surfaces of the insulating element that face opposite directions.

According to an aspect of the present disclosure, the first extension flow path may be formed on a second surface of the insulating element that faces the electrode assembly, and the second extension flow path may be formed on a first surface of the insulating element that faces the cap plate.

According to an aspect of the present disclosure, the insulating element may further include an exhaust portion positioned below a vent structure (e.g., a vent hole) formed in the cap plate and having a discharge opening, and the second extension flow path may connect the concave portion and the discharge opening.

According to an aspect of the present disclosure, the second extension flow path may include a first extension portion having a width that increases as a distance from the concave portion increases, and, optionally, a second extension portion having a uniform width and connecting the first extension portion and the exhaust portion.

According to an aspect of the present disclosure, the concave portion may include a bottom plate/bottom and a side surface/side configured to connect the bottom plate/bottom to a first surface of the insulating element that faces the cap plate. The bottom plate/bottom may include a plurality of first portions parallel to the first surface and a plurality of second portions inclined with respect to the first surface. The first portions and the second portions may for example be alternately arranged.

According to an aspect of the present disclosure, a thickness (e.g., in the first/vertical direction) of the second portion(s) may gradually decrease toward a radial outer side of the concave portion (e.g., in a direction towards the side of the concave portion).

According to an aspect of the present disclosure, the extension flow path may include a first extension flow passage/path formed on a second surface of the insulating element that faces the electrode assembly and a second extension flow passage/path formed on the first surface. The second extension flow path may for example be connected to the second portion (e.g., to one of the second portion(s) of the bottom plate).

As described above, the injection guide may be formed in an insulating element disposed between the cap and the electrode assembly of the secondary battery. The present disclosure is, however, not limited to this and the injection guide may also be formed in any other (e.g., non-insulating) element (referred to as intermediate element) disposed (e.g., in an assembled state of the battery) or to be disposed (e.g., in a non-assembled state of the battery) between the cap and the electrode assembly. Furthermore, the electrolyte injection port need not necessarily be arranged in the cap but could also be arranged elsewhere on the housing of the secondary battery (e.g., in any other part of the housing), in particular on the casing (e.g., in any part of the casing, e.g., a bottom wall thereof opposite to the cap or a side wall thereof abutting the cap).

Additionally or alternatively, the electrolyte injection inlet (formed by an electrolyte injection port and an injection guide, e.g., as described above) and/or the cap assembly (formed by a cap and an intermediate element such as an insulating element, e.g., as described above) may also be provided as a separate part or assembly independent of other components of the secondary battery, e.g., as a part or assembly for use in a secondary battery.

According to an aspect of the present disclosure, there is thus provided an electrolyte injection inlet for injecting an electrolyte into a housing (which may for example comprise a casing and a cap, e.g., as described above) of a secondary battery (e.g., as described above). The electrolyte injection inlet comprises: a first part (e.g., the cap or a part or portion of the cap, or the casing or a part or portion of the casing such as a bottom or side wall of the casing) comprising an electrolyte injection port (e.g., as described above); and a second part (e.g., an intermediate element and in particular an insulating element, e.g., as described above) disposed on the first part. The second part comprises an injection guide facing the electrolyte injection port, wherein the injection guide comprises a concave portion (e.g., as described above) and at least one extension flow passage (e.g., as described above). The concave portion forms a recess in a first surface of the second part facing the first part. The at least one extension flow passage is formed at the first surface of the second part and/or at a second surface of the second part opposite to the first surface. The extension flow passage is in fluid communication with the recess formed by the concave portion to allow the electrolyte to flow therethrough and extends away from the concave portion along the first and second surface, respectively.

According to an aspect of the present disclosure, there is also provided a cap assembly for use in a secondary battery (e.g., as described above). The cap assembly comprises a cap (as an example of a first part) coupled or to be coupled to a casing of the secondary battery accommodating an electrode assembly of the secondary battery and an intermediate element (as an example of a second part, wherein the intermediate element may in particular be embodied as an insulating element) disposed or to be disposed between the cap and the electrode assembly. The cap assembly further comprises the electrode injection inlet according to the preceding aspect, wherein the cap is or comprises the first part of the electrolyte injection inlet comprising the electrolyte injection port and the intermediate element is or comprises the second part comprising the injection guide.

The electrolyte injection inlet and the cap assembly may additionally comprise any feature or combination of features as set out above for the secondary battery according to the present disclosure and its components.

According to an aspect of the present disclosure, there is also provided a secondary battery comprising one or both of the electrolyte injection inlet and the cap assembly according to the two preceding aspects.

The electrolyte injection inlet, the cap assembly and/or the secondary battery according to the present disclosure (e.g., according to any one of the aspects and embodiments of the present disclosure described above) may include any combination of the features described herein, including those features that are described below for the exemplary embodiments from the drawings. Put differently, unless explicitly stated or otherwise directly and unambiguously apparent, all of the features described herein are compatible and may be combined with each other (independently of the presence or absence of other features) in the electrolyte injection inlet, the cap assembly and/or the secondary battery according to the present disclosure.

### BRIEF DESCRIPTION OF THE DRAWINGS

FIG. 1 is a perspective view illustrating a secondary battery according to a first embodiment of the present disclosure.
FIG. 2 is an exploded perspective view illustrating some components of the secondary battery in FIG. 1.
FIG. 3 is a cross-sectional view taken along line III-III in FIG. 1.
FIG. 4 is a perspective view illustrating an insulating element of the secondary battery according to the first embodiment of the present disclosure, when viewed from above.
FIG. 5 is a perspective view illustrating the insulating element of the secondary battery according to the first embodiment of the present disclosure, when viewed from below.
FIG. 6 is a cutaway perspective view illustrating an injection guide of the insulating element according to the first embodiment of the present disclosure.
FIG. 7 is a perspective view illustrating the injection guide of the insulating element according to the first embodiment of the present disclosure, when viewed from below.
FIG. 8 is a partial cross-sectional view illustrating a cap plate and the insulating element according to the first embodiment of the present disclosure.
FIG. 9 is a cross-sectional view illustrating a portion of a concave portion according to the first embodiment of the present disclosure.
FIG. 10 is a cross-sectional view of the concave portion according to the first embodiment of the present disclosure, taken along a thickness direction, when viewed from an inner side toward an outer side.
FIG. 11 is a cross-sectional view illustrating an exhaust portion of the insulating element according to the first embodiment of the present disclosure.
FIG. 12 is a partial cross-sectional view illustrating a cap plate and an insulating element according to a second embodiment of the present disclosure.
FIG. 13 is a cutaway perspective view illustrating an injection guide according to a third embodiment of the present disclosure.
FIG. 14 is a cross-sectional view illustrating the injection guide according to the third embodiment of the present disclosure.
FIG. 15 is a cutaway perspective view illustrating an injection guide according to a fourth embodiment of the present disclosure.
FIG. 16 is a cross-sectional view illustrating the injection guide according to the fourth embodiment of the present disclosure.
FIG. 17 is a cross-sectional view illustrating an injection guide according to a fifth embodiment of the present disclosure.
FIG. 18 is a cutaway perspective view illustrating an injection guide according to a sixth embodiment of the present disclosure.
FIG. 19 is a cross-sectional view illustrating the injection guide according to the sixth embodiment of the present disclosure.
FIG. 20 is a cutaway perspective view illustrating an injection guide according to a seventh embodiment of the present disclosure.
FIG. 21 is a cross-sectional view illustrating the injection guide according to the seventh embodiment of the present disclosure.
FIG. 22 is a cross-sectional view illustrating a buffer protrusion of an insulating element according to an eighth embodiment of the present disclosure.
FIG. 23 is a cross-sectional view illustrating a buffer protrusion of an insulating element according to a ninth embodiment of the present disclosure.
FIG. 24 is a perspective view illustrating a secondary battery according to a tenth embodiment of the present disclosure.
FIG. 25 is a cross-sectional view illustrating the secondary battery according to the tenth embodiment of the present disclosure.
FIG. 26 is a perspective view illustrating an insulating element of the secondary battery according to the eleventh embodiment of the present disclosure, when viewed from above.
FIG. 27 is a bottom view illustrating an insulating element of the secondary battery according to the eleventh embodiment of the present disclosure.
FIG. 28 is a cutaway perspective view illustrating an injection guide of the insulating element according to the eleventh embodiment of the present disclosure.
FIG. 29 is a partial cross-sectional view illustrating a cap plate and the insulating element according to the eleventh embodiment of the present disclosure.

### DETAILED DESCRIPTION

The present disclosure may be subject to various modifications and may have many different embodiments, and thus certain embodiments will be illustrated by way of example and described in detail in the Detailed Description. It should be understood, however, that this is not intended to limit the present disclosure to certain forms of embodiments, but the embodiments include all modifications, equivalents, and substitutes that fall within the spirit and scope of the present disclosure.

For ease of description, various features and elements of the present disclosure may be disclosed in combination in the embodiments described below. Unless mentioned otherwise, this does, however, not imply any functional or structural link between the respective features and elements. Each individual one of the features and elements (and each combination of features and elements) described below may also be present in the secondary battery according to the present disclosure in isolation and separate from the other features and elements of the respective embodiment. This applies in particular to the electrolyte injection inlet and the cap assembly, both of which may also be provided individually, i.e., not as part of an (e.g., assembled) secondary battery but as a separate part or assembly (e.g., separate from the other components of the secondary battery).

The terminology used in the present disclosure is used merely for the purpose of describing certain embodiments, and is not intended to limit the embodiments. The singular form includes the plural form, unless the context clearly dictates otherwise. In the present disclosure, the terms such as "comprising/including" or "having" are intended to specify the presence of a feature, a number, a step, an operation, a component, a part, or a combination thereof described herein, but are not to be construed as precluding the possibility of the presence or addition of one or more other features, numbers, steps, operations, components, parts, or combinations thereof.

Exemplary embodiments will be described below in detail with reference to the accompanying drawings. It should be noted that like reference numerals refer to like parts throughout various drawings and exemplary embodiments. In certain embodiments, a detailed description of functions and configurations well known in the art may be omitted to avoid obscuring appreciation of the disclosure by those skilled in the art. For the same reason, some components may be exaggerated, omitted, or schematically illustrated in the accompanying drawings.

A secondary battery according to a first embodiment of the present disclosure will be described below.

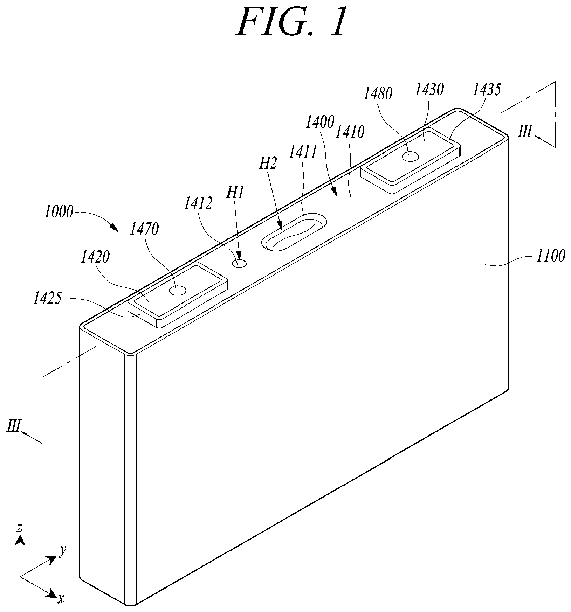

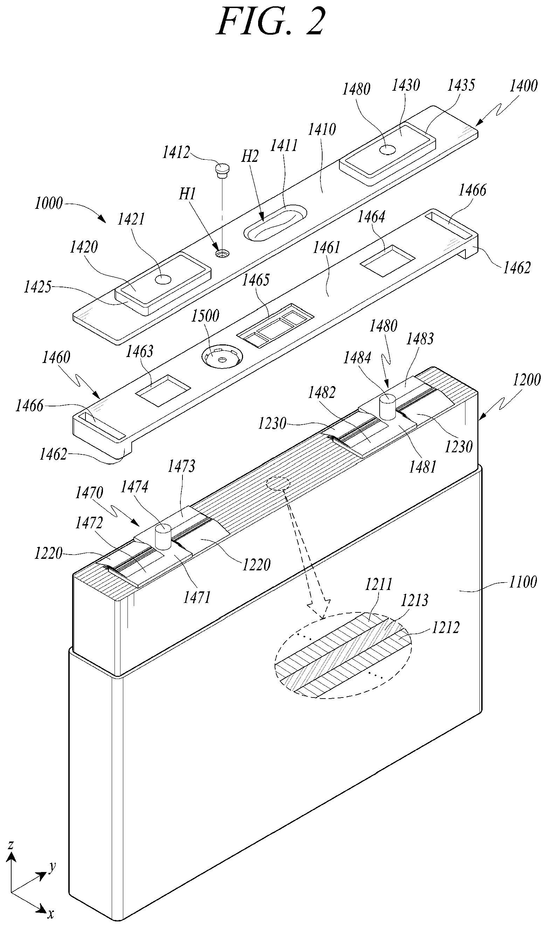

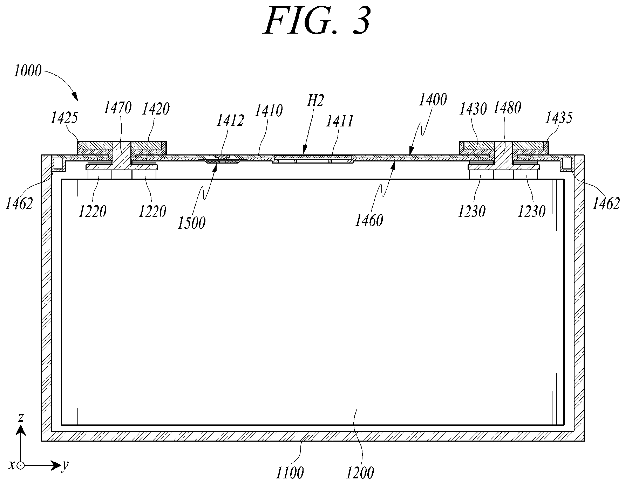

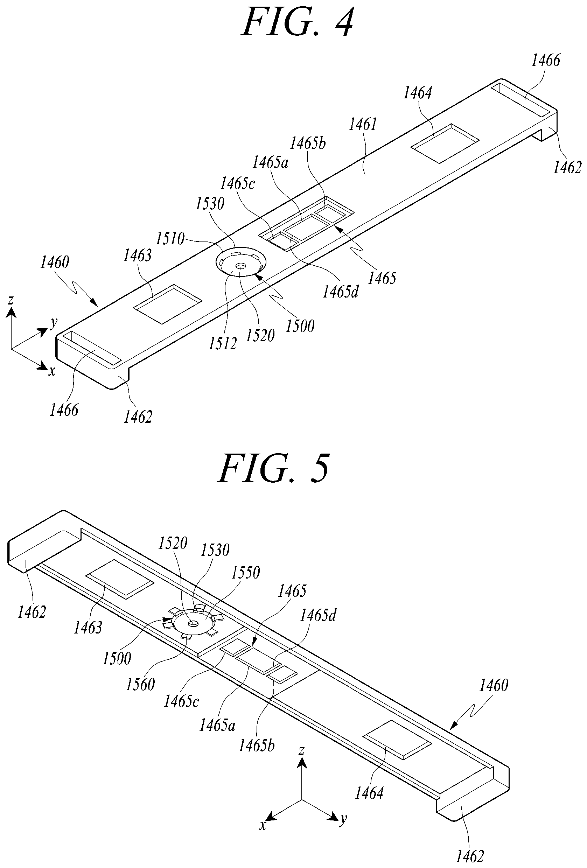

FIG. 1 is a perspective view illustrating a secondary battery according to the first embodiment of the present disclosure. FIG. 2 is an exploded perspective view illustrating some components of the secondary battery in FIG. 1. FIG. 3 is a cross-sectional view taken along line III - III in FIG. 1. FIG. 4 is a perspective view illustrating an insulating element of the secondary battery according to the first embodiment of the present disclosure, when viewed from above.

Referring to FIG. 1 to FIG. 4, a secondary battery 1000 according to the first embodiment may be a lithium-ion secondary battery, and/or may be configured as a prismatic battery having a casing. However, the present disclosure is not limited thereto, and the secondary battery 1000 may be configured as various types of batteries capable of charging and discharging, such as a sodium battery, a sodium-ion battery, or a lithium-sulfur battery.

The secondary battery 1000 may include an electrode assembly 1200 including a positive electrode 1211 and a negative electrode 1212, a casing 1100 configured to accommodate the electrode assembly 1200, and a cap assembly 1400 coupled to the casing 1100.

The electrode assembly 1200 may include the positive electrode 1211, the negative electrode 1212, and, optionally, a separator 1213 interposed between the positive electrode 1211 and the negative electrode 1212. The positive electrode 1211, the separator 1213, and the negative electrode 1212 may be configured in a stacked structure, or configured in a structure wound in a jelly-roll form. In addition, the electrode assembly 1200 may be configured in a structure in which the positive electrode 1211 and the negative electrode 1212 are alternately inserted between the separator 1213 bent in a zigzag shape. In addition, the electrode assembly 1200 may be configured in various forms.

The positive electrode 1211 and the negative electrode 1212 may include a coating portion, which is a region where an active material is applied on a metal foil. The positive electrode 1211 and the negative electrode 1212 may further include a positive electrode tab 1220 or a negative electrode tab 1230, which is a region where an active material is not applied.

The positive electrode tab 1220 may protrude from an upper end of the positive electrode 1211 toward a cap (here embodied as, and thus referred to as, a cap plate) 1410. The negative electrode tab 1230 may protrude from an upper end of the negative electrode 1212 toward the cap plate 1410. However, the present disclosure is not limited thereto, and the positive electrode tab 1220 and the negative electrode tab 1230 may protrude in directions opposite to each other.

The separator 1213 may be disposed between the positive electrode 1211 and the negative electrode 1212. The separator 1213 may prevent a short circuit and may enable movement of ions. If a secondary battery 1000 is configured as an all-solid-state battery, a solid electrolyte, instead of the separator 1213, may be positioned between the positive electrode 1211 and the negative electrode 1212.

The positive electrode tab 1220 and the negative electrode tab 1230 may be spaced apart from each other in a longitudinal direction (y-axis direction) of the cap plate 1410, which may, e.g., be the direction corresponding to the major axis/largest physical dimension of the cap plate 1410 and/or of the casing 1100. The positive electrode tabs 1220 and the negative electrode tabs 1230 may be stacked in a thickness direction (x-axis direction) of the casing 1100, which may, e.g., be the direction corresponding to the minor axis/smallest physical dimension of the casing 1100 and/or the short side/edges of the cap plate 1410.

The electrode assembly 1200 may include two positive electrode tab arrays having the same polarity. Two positive electrode tabs 1220 may be formed on a single positive electrode plate. In addition, the electrode assembly 1200 may include two negative electrode tab arrays having the same polarity. Two negative electrode tabs 1230 may be formed on a single negative electrode plate.

In addition, the positive electrode tab 1220 may be connected to a first terminal 1420 by means of a first current collecting element 1470. The negative electrode tab 1230 may be connected to the second terminal 1430 by means of a second current collecting element 1480.

The casing 1100 may be formed in a box shape having an internal space configured to accommodate the electrode assembly 1200. The casing 1100 may be formed in a prismatic shape with a rectangular cross-section; however, the present disclosure is not limited thereto, and the casing 1100 may be formed in various shapes, such as a cylindrical shape. A single electrode assembly 1200 or a plurality of the electrode assemblies 1200 may be inserted into the casing 1100.

The electrode assembly 1200 and an electrolyte may be accommodated inside the casing 1100. The electrolyte may be in a liquid, solid, or gel state.

The cap assembly 1400 may include the cap plate 1410 (as an example of a cap and an example of a first part of an electrolyte injection inlet) coupled to the casing 1100. The cap assembly 1400 may further include one or both of the terminals 1420 and 1430 installed on the cap plate 1410, and/or one or both of the current collecting elements 1470 and 1480, which may, e.g., be configured to connect the terminals 1420 and 1430 to the electrode assembly 1200. The cap assembly 1400 may further include an insulating element 1460 (as an example of a second part of an electrolyte injection inlet and as an example of an intermediate element of a cap assembly) disposed between the cap plate 1410 and the electrode assembly 1200.

The cap plate 1410 may be formed of a plate (e.g., a rectangular plate) that covers an opening of the casing 1100. The cap plate 1410 may have a shape corresponding to a shape of the opening of the casing 1100. The cap plate 1410 may be fixed to the casing 1100, e.g., by welding such as laser welding.

The cap plate 1410 may be formed with an electrolyte injection port H1 (for example a hole, which may, e.g., have a circular or polygonal shape) for injecting an electrolyte. In some examples, the cap plate 1410 may further be formed with a vent hole H2 in which a vent element 1411 may be installed. A sealing plug 1412 configured to block the electrolyte injection port H1 may be installed in the electrolyte injection port H1. The vent hole H2 may be formed with the vent element 1411 configured to open at a preset pressure.

The terminals 1420 and 1430 may be connected to an outer surface of the cap plate 1410. One terminal 1420 or 1430 or two terminals 1420 and 1430 may be installed on the cap plate 1410. If two terminals 1420 and 1430 are installed on the cap plate 1410, the first terminal 1420 may be configured as a positive terminal, and the second terminal 1430 may be configured as a negative terminal. If one terminal is installed on the cap plate 1410, the casing 1100 may, e.g., form or comprise the second terminal and may for example be negatively charged.

The first terminal 1420 and the second terminal 1430 may be formed in a plate shape. The first terminal 1420 may be formed with a terminal hole 1421 into which the first current collecting element 1470 is inserted. The second terminal 1430 may be formed with a terminal hole 1431 into which the second current collecting element 1480 is inserted.

A gasket 1425 for insulation may be installed between the first terminal 1420 and the cap plate 1410. A gasket 1435 for insulation may be installed between the second terminal 1430 and the cap plate 1410. In addition, the gaskets 1425 and 1435 may extend downward and, e.g., also be positioned between the current collecting elements 1470 and 1480 and the cap plate 1410. The gaskets 1425 and 1435 may be configured as a single element, or divided into a plurality of elements.

The first terminal 1420 may be electrically connected to the positive electrode tab 1220 by means of the first current collecting element 1470. The second terminal 1430 may be electrically connected to the negative electrode tab 1230 by means of the second current collecting element 1480.

The first current collecting element 1470 may include some or all of a center portion 1471, a first current collecting protrusion 1472 configured to protrude from one side end of the center portion 1471, a second current collecting protrusion 1473 configured to protrude from a remaining side end of the center portion 1471, and a connection post 1474 configured to protrude from the center portion 1471 toward the cap plate 1410. The first current collecting protrusion 1472 and the second current collecting protrusion 1473 may be spaced apart from each other in the longitudinal direction (y-axis direction) and the thickness direction (x-axis direction) of the electrode assembly 1200.

The positive electrode tab 1220 may be bonded to the first current collecting protrusion 1472 and the second current collecting protrusion 1473. The positive electrode tab arrays may be bent in opposite directions from each other. The positive electrode tabs may be fixed, e.g., by welding, to the first current collecting protrusion 1472 or the second current collecting protrusion 1473. The positive electrode tabs 1220 may be bonded to an upper surface of the first current collecting protrusion 1472 or the second current collecting protrusion 1473.

The connection post 1474 may be formed as a cylinder, and/or may be integrally formed with the center portion 1471. However, the present disclosure is not limited thereto, and the connection post 1474 may also be fixed, by welding, to the center portion 1471.

In addition, the second current collecting element 1480 may include some or all of a center portion 1481, a first current collecting protrusion 1482 configured to protrude from one side end of the center portion 1481, a second current collecting protrusion 1483 configured to protrude from a remaining side end of the center portion 1481, and a connection post 1484 configured to protrude from the center portion 1481 toward the cap plate 1410. The first current collecting protrusion 1482 and the second current collecting protrusion 1483 may be spaced apart from each other in the longitudinal direction (y-axis direction) and the thickness direction (x-axis direction) of the electrode assembly 1200.

The negative electrode tab 1230 may be bonded to the first current collecting protrusion 1482 and the second current collecting protrusion 1483. The negative electrode tab arrays may be bent in opposite directions from each other and fixed, e.g., by welding, to the first current collecting protrusion 1482 or the second current collecting protrusion 1483. The negative electrode tabs 1230 may be bonded to an upper surface of the first current collecting protrusion 1482 or the second current collecting protrusion 1483.

The connection post 1474 of the first current collecting element 1470 may be bonded by welding while being inserted into the first terminal 1420. The connection post 1484 of the second current collecting element 1480 may be bonded by welding while being inserted into the second terminal 1430.

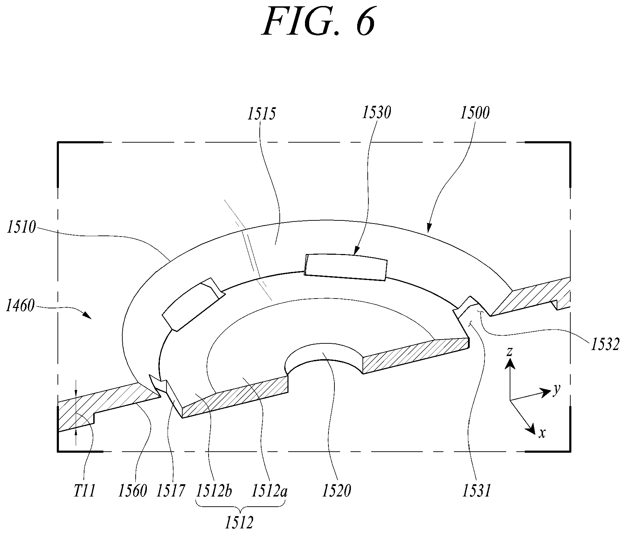

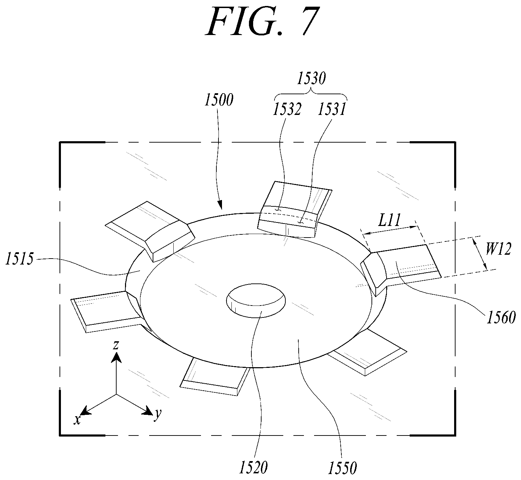

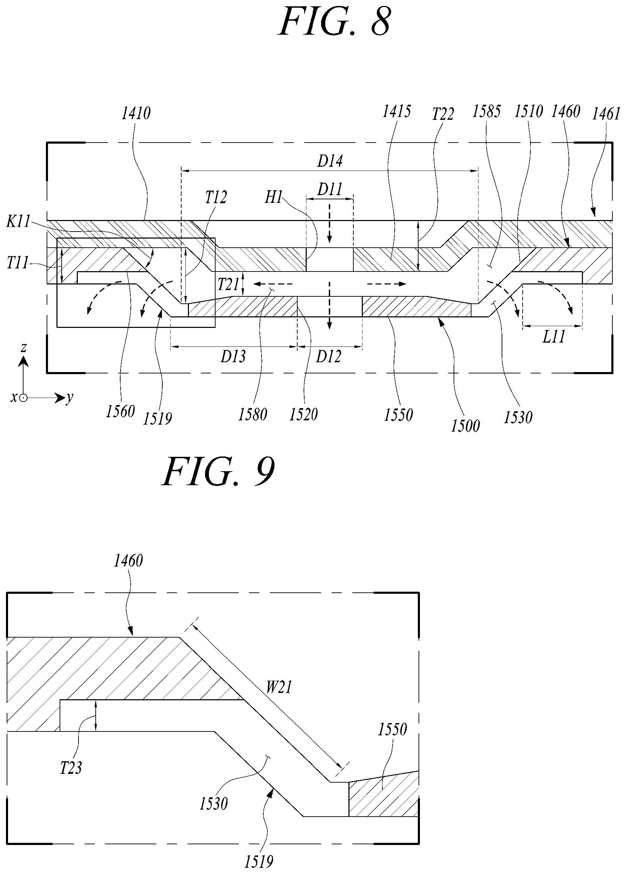

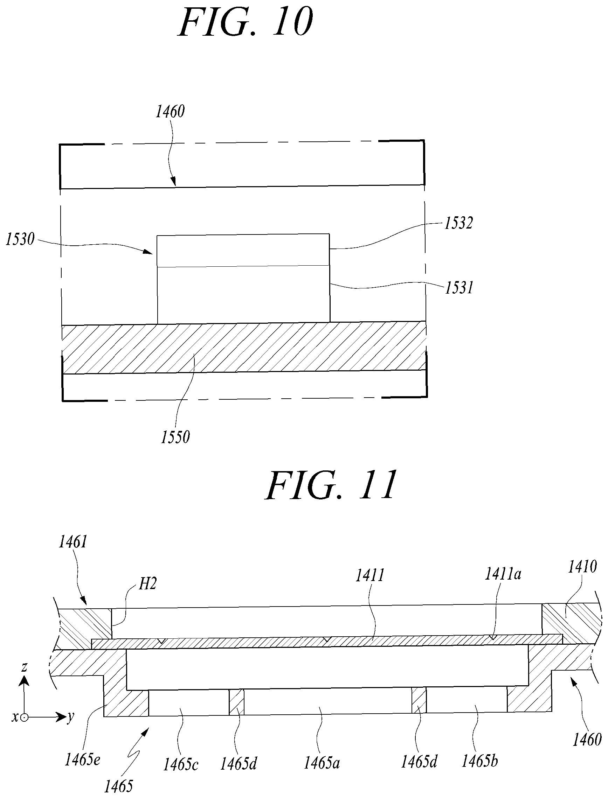

FIG. 4 is a perspective view illustrating an insulating element of the secondary battery according to the first embodiment of the present disclosure, when viewed from above (e.g., onto a first surface of the insulating element facing the cap). FIG. 5 is a perspective view illustrating the insulating element of the secondary battery according to the first embodiment of the present disclosure, when viewed from below (e.g., onto a second surface of the insulating element opposite to the first surface/facing the electrode assembly). FIG. 6 is a cutaway perspective view illustrating an injection guide of the insulating element according to the first embodiment of the present disclosure (e.g., when view from above onto the first surface of the insulating element). FIG. 7 is a perspective view illustrating the injection guide of the insulating element according to the first embodiment of the present disclosure, when viewed from below (e.g., onto the second surface of the insulating element). FIG. 8 is a partial cross-sectional view illustrating a cap plate and the insulating element according to the first embodiment of the present disclosure. FIG. 9 is a cross-sectional view illustrating a portion of a concave portion according to the first embodiment of the present disclosure. FIG. 10 is a cross-sectional view of the concave portion according to the first embodiment of the present disclosure, taken along a thickness direction, when viewed from an inner side toward an outer side.

Referring to FIGS. 4 to 10, the insulating element 1460 (as an example of a second part of an electrolyte injection inlet and as an example of an intermediate element of a cap assembly) is installed between the cap plate 1410 and the electrode assembly 1200. The insulating element 1460 may insulate the cap plate 1410 from the electrode assembly 1200. The insulating element 1460 may have a shape corresponding to the cap plate 1410, and may for example be formed in a form of an elongated rectangular plate. The insulating element 1460 (e.g., the first/upper surface thereof) may be disposed to face the cap plate 1410, and may be disposed parallel to the cap plate 1410 (e.g., to a second/lower surface of the cap plate facing the insulating element 1460).

The insulating element 1460 may include: a base plate 1461 in a form of a rectangular plate; and, optionally, two buffer protrusions 1462 configured to protrude downward, from edges (e.g., short edges) of the base plate 1461 that are opposite in the longitudinal direction (y-axis direction), toward the electrode assembly 1200.

The base plate 1461 may be formed with a first hole 1463 into which a lower end of the gasket 1425 of the first terminal 1420 is inserted, and/or a second hole 1464 into which a lower end of the gasket 1435 of the second terminal 1430 is inserted.

In response to the electrode assembly 1200 moving upward, the buffer protrusions 1462 may contact the electrode assembly 1200 and may mitigate impact applied to the electrode assembly 1200. The buffer protrusions 1462 may be formed to be elastically deformable. The buffer protrusion 1462 may contact the electrode assembly 1200 and may reduce vibration of the electrode assembly 1200.

An outer groove 1466 may be formed, in the insulating element 1460, on an outer side of a portion (a portion facing the cap plate 1410, e.g., on the first/upper surface of the insulating element) formed with the buffer protrusions 1462. With the outer groove 1466 formed as described above, a thicknesses of the buffer protrusions 1462 is reduced, and the buffer protrusions 1462 may be easily deformed, such that impact applied to the electrode assembly 1200 may be mitigated.

In addition, the insulating element 1460 may include: an injection guide 1500 positioned below the electrolyte injection port H1; and, optionally, an exhaust portion 1465 positioned below the vent hole H2.

The injection guide 1500 is formed in the insulating element 1460 and may assist with electrolyte injection. The injection guide 1500 may include a concave portion 1510, an internal hole (central hole) 1520, a side hole 1530, and an extension flow path (extension flow passage) 1560.

The concave portion 1510 may be positioned in a lower space corresponding to the electrolyte injection port H1 and is configured in a structure concavely recessed toward the electrode assembly 1200 (e.g., forming a recess in the first/upper surface of the insulating element facing the cap). The concave portion 1510 may include a bottom plate (bottom) 1512 positioned at a lower portion and a side surface (side) 1515 configured to connect the bottom plate 1512 to the insulating element 1460 (e.g., the first/upper surface thereof). The side surface 1515 is disposed to be inclined with respect to a lower surface (second surface) of the cap plate 1410, the bottom plate 1512, and an inner surface (second/lower surface) of the insulating element 1460 that is oriented toward the electrode assembly 1200.

An inclination angle K11 between a portion of the side surface 1515 that is oriented toward an inner side of the concave portion 1510 and a portion of the lower surface of the cap plate 1410 that faces the concave portion 1510 may be 25 to 75 degrees. If the inclination angle K11 is formed to be less than 25 degrees, an area of the inclined surface may increase. Accordingly, strength of the insulating element 1460 may decrease, and a height of the concave portion 1510 may decrease, resulting in insufficient space for accommodating an electrolyte. If the inclination angle K11 is formed to be greater than 75 degrees, strength of the insulating element 1460 may increase, but an area of the side hole 1530 may decrease, making it difficult to rapidly deliver the electrolyte to the extension flow path 1560 through the side hole 1530.

In addition, a greatest width W21 of the side surface 1515 may be 1.25 to 5 times, in some examples 1.25 to 2.45 times, a thickness T11 of a portion of the insulating element 1460 that is connected to a longitudinal outer side of the extension flow path 1560 (e.g., a thickness of a portion of the insulating element abutting a distal end of the extension flow passage as seen from the concave portion). As used herein, the greatest width W21 of the side surface 1515 may, e.g., refer to a length of a longest line segment among line segments that connect upper and lower ends of the side surface 1515 by a shortest distance.

If the greatest width W21 of the side surface 1515 is less than 1.25 times the thickness T11, there may be insufficient space for accommodating the electrolyte. Accordingly, the electrolyte may not be uniformly distributed to each of the extension flow paths 1560. If the greatest width W21 of the side surface 1515 is greater than 2.45 times the thickness T11, in particular greater than 5 times, a volume of the secondary battery 1000 may unnecessarily increase, and a self-weight of the concave portion 1510 may increase. Accordingly, a longitudinal central portion of the insulating element 1460 may sag downward and be deformed.

The greatest width W21 of the side surface 1515 may be 1.02 mm to 3.5 mm, in some examples 1.02 mm to 1.82 mm. If the greatest width W21 of the side surface 1515 is less than 1.02 mm, there may be insufficient space for accommodating the electrolyte. Accordingly, the electrolyte may not be uniformly distributed to each of the extension flow paths 1560. If the greatest width W21 of the side surface 1515 is greater than 1.82 mm, in particular greater than 3.5 mm, a volume of the secondary battery 1000 may unnecessarily increase, and a self-weight of the concave portion 1510 may increase. Accordingly, the longitudinal central portion of the insulating element 1460 may sag downward and be deformed.

The concave portion 1510 may be formed to have an inner diameter (e.g., a diameter of the recess formed by the concave portion 1510) gradually decreasing toward the electrode assembly 1200. In addition, a guide protrusion portion (guide protrusion) 1550 configured to protrude convexly inward may be formed on an opposite side of the concave portion 1510 (e.g., on the second surface of the insulating element 1460).

The bottom plate 1512 may be formed as a substantially circular plate, and/or may be formed as a flat plate (e.g., parallel to the second surface of the insulating element 1460). Accordingly, the concave portion 1510 may have a longitudinal crosssection having a substantially truncated cone shape.

The bottom plate 1512 may include a first bottom surface 1512a parallel to the lower surface (second surface) of the cap plate 1410 and a second bottom surface 1512b disposed to be inclined with respect to the lower surface of the cap plate 1410. The first bottom surface 1512a is disposed inward of the second bottom surface 1512b (e.g., around a center of the bottom plate 1512), and the second bottom surface 1512b is disposed to surround the first bottom surface 1512a.

The second bottom surface 1512b may be disposed to be inclined downward with respect to the lower surface of the cap plate 1410 (e.g., so as to extend away from the lower surface of the cap plate 1410 in the direction from the center of the bottom plate 1512 towards the side surface 1515 of the concave portion 1510). Accordingly, a gap between the first bottom surface 1512a and the cap plate 1410 may be uniformly formed, and a gap between the second bottom surface 1512b and the cap plate 1410 may gradually increase toward the outside. A thickness of the second bottom surface 1512b (e.g., in the direction from the second/lower surface to the first/upper surface of the insulating element 1460, which may correspond to the z-axis in the figures) may be formed to gradually decrease toward a radial outer side.

Accordingly, a height of an accommodation space 1580 may gradually increase from the second bottom surface 1512b toward the outside. An electrolyte supplied to the concave portion 1510 may move rapidly from the first bottom surface 1512a to the second bottom surface 1512b.

A smallest diameter D14 of the concave portion 1510 (e.g., a smallest diameter of the recess formed by the concave portion 1510) may be formed to be larger than a diameter D11 of the electrolyte injection port H1. The smallest diameter D14 of the concave portion 1510 may for example be 1.5 to 8 times, in some examples 1.5 to 6.5 times, the diameter D11 of the electrolyte injection port H1. The smallest diameter D14 of the concave portion 1510 may be 7 mm to 16.5 mm, in some examples 9 mm to 16.5 mm. The diameter D11 of the electrolyte injection port H1 may be 2 mm to 6 mm. Accordingly, a sufficient amount of electrolyte may be accommodated in the concave portion 1510. Even if a portion of electrolyte injection paths is blocked, backflow of the electrolyte may be minimized.

In addition, a greatest depth T12 of the concave portion 1510 (e.g., a greatest depth of the recess formed by the concave portion 1510) may be formed to be greater than a thickness of the insulating element 1460 (e.g., a thickness between the first and second surface thereof). The greatest depth T12 of the concave portion 1510 may be formed to be 0.4 to 2.1 times, in some examples, 1.02 to 2.1 times, the thickness T11 of the portion of the insulating element 1460 that is connected to the longitudinal outer side of the extension flow path 1560.

If the greatest depth T12 of the concave portion 1510 is less than 1.02 times the thickness T11, in particular less than 0.4 times the thickness T11, there may be insufficient space for accommodating the electrolyte. Accordingly, the electrolyte may not be uniformly distributed to each of the extension flow paths 1560. If the greatest depth T12 of the concave portion 1510 is greater than 2.1 times the thickness T11, a volume of the secondary battery 1000 may unnecessarily increase, and the insulating element 1460 may be deformed.

The greatest depth T12 of the concave portion 1510 may be 0.5 mm to 2.4 mm. The thickness T11 of the portion of the insulating element 1460 that is connected to the longitudinal outer side of the extension flow path 1560 may be 0.4 mm to 1.2 mm.

The internal hole (central hole) 1520 may be positioned at a center of the bottom plate 1512 of the concave portion 1510. The internal hole 1520 may be formed to face the electrolyte injection port H1. A diameter D12 of the internal hole 1520 may be formed to be larger than the diameter D11 of the electrolyte injection port H1. The internal hole 1520 may be positioned inside a lower region corresponding to the electrolyte injection port H1.

The diameter D12 of the internal hole 1520 may be 1.05 to 1.5 times the diameter D11 of the electrolyte injection port H1. The diameter D12 of the internal hole 1520 may be 2.5 mm to 6 mm. The diameter D11 of the electrolyte injection port H1 may be 2 mm to 4 mm. Accordingly, the electrolyte may be preferentially supplied downward through the internal hole 1520. If the supply through the internal hole 1520 is not smooth, the electrolyte may be supplied downward through the side hole 1530 and/or the extension flow path/passage 1560 to minimize backflow of the electrolyte.

A bottom gap D13 between an outer end of the internal hole 1520 and an outer end of the bottom plate 1512 of the concave portion 1510 (e.g., the radial extent of the bottom plate 1512 between an outer edge of the internal hole 1520 and an outer end of the bottom plate 1512) may be formed to be larger than the diameter D12 of the internal hole 1520. The bottom gap D13 may for example be 1.05 to 1.8 times, in one example 1.2 to 3.5, the diameter D12 of the internal hole 1520. Accordingly, if the internal hole 1520 is blocked, the electrolyte may move sufficiently far from the internal hole 1520 and be injected into an open space. The bottom gap D13 may for example be 3.5 mm to 12.5 mm, in one example 8.5 mm to 16.5 mm.

The side hole 1530 may be formed in the side surface 1515. A plurality of the side holes 1530 may be disposed to be spaced apart from each other at intervals in a peripheral direction of the side surface 1515. The concave portion 1510 may be formed with a bottom groove (e.g., a cutout) 1517 connected to the side hole 1530. The bottom groove 1517 may be configured in a structure concavely recessed inward in a radial direction from a side end of the bottom plate 1512 (e.g., forming a cutout). The bottom groove 1517 may be connected to the side hole 1530 and may assist with discharge of the electrolyte from the concave portion 1510.

As illustrated in FIG. 6 and 10, the side hole 1530 may include a first portion 1531 formed in the side surface 1515 and a second portion 1532 formed to be recessed in a thickness direction of the insulating element 1460 (e.g., forming a depression in the second/lower surface of the insulating element). The first portion 1531 may be formed to pass through the side surface 1515. The second portion 1532 may be recessed in the thickness direction of the insulating element 1460 and connected to the extension flow path 1560 (e.g., form a depression on the second/lower surface of the insulating element that connects to and/or forms the extension flow passage at least in part). By including the first portion 1531 and the second portion 1532 of the side hole 1530 as described above, the electrolyte may be easily supplied to the extension flow path 1560 through the side hole 1530; and even when the side hole 1530 is partially blocked, the electrolyte may be delivered through the second portion 1532.

Since the side hole 1530 is formed in the inclined side surface 1515, as the side hole 1530 extends toward the cap plate 1410, the side hole 1530 gradually protrudes toward the outside in a radial direction of the concave portion 1510.

In addition, the extension flow path 1560 may be formed as a depression, in particular in a groove shape, recessed from a surface of the insulating element 1460. However, the present disclosure is not limited thereto, and the extension flow path 1560 may also be positioned inside the insulating element 1460 (e.g., below the first or second surface thereof).

The insulating element 1460 may include an outer surface (first/upper surface) oriented toward the cap plate 1410 and an inner surface (second/lower surface) oriented toward the electrode assembly 1200. The extension flow path 1560 may be formed on the inner surface of the insulating element 1460. The extension flow path 1560 may be connected to the side hole 1530. A convex portion 1519 (e.g., forming a guide protrusion) configured to protrude inward may be formed on an opposite side of the concave portion 1510. The extension flow path 1560 may extend outward in a radial direction from the convex portion 1519. When viewed from below the insulating element 1460, the extension flow path 1560 may be substantially connected to an upper end (e.g., a base) of the convex portion 1519.

The extension flow path 1560 may be open downward toward the electrode assembly 1200. The extension flow path 1560 may be substantially connected to an upper end of the side hole 1530 and form an additional path extending outward from the side hole 1530.

A plurality of the extension flow paths 1560 may be radially disposed.

A depth T23 (e.g., in the direction from the second surface to the first surface of the insulating element 1460, or vice-versa) of the extension flow path 1560 may be 0.15 to 0.5 times the thickness T11 of the portion of the insulating element 1460 that is connected to the longitudinal outer side of the extension flow path 1560. If the depth T23 of the extension flow path 1560 is less than 0.15 times the thickness T11, an electrolyte injection speed may decrease, and a lower structure may be easily inserted into the extension flow path during electrolyte injection. If the depth T23 of the extension flow path 1560 is greater than 0.5 times the thickness T11, strength of the insulating element 1460 may decrease, resulting in deformation of the insulating element 1460 and sagging of the longitudinal central portion of the insulating element 1460.

In addition, the depth T23 of the extension flow path 1560 may be 0.02 to 0.35 times a length L11 of the extension flow path 1560. If the depth T23 of the extension flow path 1560 is less than 0.02 times the length L11 of the extension flow path 1560, an electrolyte injection speed may decrease, resulting in reduced productivity. If the depth T23 of the extension flow path 1560 is greater than 0.35 times the length L11 of the extension flow path 1560, the insulating element 1460 may be deformed. The depth T23 of the extension flow path 1560 may be 0.1 mm to 0.5 mm.

The length L11 of the extension flow path 1560 may be formed smaller than the smallest diameter D14 of the concave portion 1510. As used herein, the length L11 of the extension flow path 1560 may, e.g., refer to a length of the extension flow path 1560 measured on a plane of the insulating element 1460 that is oriented toward the electrode assembly 1200 (e.g., a plane parallel to the second/lower surface of the insulating element 1460).

The length L11 of the extension flow path 1560 may be 0.15 to 0.6 times the smallest diameter D14 of the concave portion 1510. Accordingly, the electrolyte may be uniformly distributed, thereby improving an electrolyte injection speed, and preventing a decrease in the electrolyte injection speed even when a portion of flow paths is blocked.

In addition, the length L11 of the extension flow path 1560 may be 0.4 to 1.5 times, in one example 0.8 to 1.2 times, the diameter D12 of the internal hole 1520. If the length L11 of the extension flow path 1560 is less than 0.8 times the diameter D12 of the internal hole 1520, in particular less than 0.4 times the diameter D12 of the internal hole 1520, an electrolyte injection speed may decrease. If the length L11 of the extension flow path 1560 is greater than 1.2 times the diameter D12 of the internal hole 1520, in particular greater than 1.5 times the diameter D12 of the internal hole 1520, strength of the insulating element 1460 may decrease, which may result in bending of the insulating element 1460.

The length L11 of the extension flow path 1560 may be 0.7 to 1.6 times a width W11 of the extension flow path 1560. Accordingly, the length L11 of the extension flow path 1560 may be sufficiently secured, such that an electrolyte may be rapidly injected through the extension flow path 1560. The length L11 of the extension flow path 1560 may be 1.5 mm to 6 mm, in one example 2 mm to 6 mm. The width W11 of the extension flow path 1560 may be 2.5 mm to 6.5 mm.

With the extension flow path 1560 formed as depression and in particular in a groove shape, strength of the insulating element 1460 may be significantly improved, compared to a through-type structure (e.g., cutout or hole structure extending all the way through the insulating element). With the extension flow path 1560 formed in a hole or cutout shape, strength at a cutout portion may decrease, resulting in sagging, deformation of the insulating element 1460, or damage to the insulating element 1460. In particular, with the secondary battery 1000 installed in a vehicle, vibration may be applied to the secondary battery 1000. Due to the vibration, the central portion of the insulating element 1460 may sag downward, or a crack may occur at the cutout portion or a hole portion. However, according to the present embodiment, since the extension flow path 1560 is formed in a groove shape, deformation of the insulating element 1460 and occurrence of a crack may be minimized.

In addition, since the extension flow path 1560 is formed as a depression and in particular in a groove shape on the lower surface of the insulating element 1460, the extension flow path 1560 may extend for a substantial length while preventing deformation. Furthermore, the extension flow path 1560 (being open towards the electrode assembly 1200) may provide a sufficiently large bottom opening area, allowing the electrolyte to easily flow downward.

In addition, the extension flow path 1560 is connected to an upper end of the guide protrusion portion (guide protrusion) 1550 where the guide protrusion portion connects to the lower surface of the insulating element 1460 and extends outwardly. Even if the lower surface of guide protrusion 1550 contacts an internal element, there may remain a space between extension flow path 1560 and the side of protrusion 1550, enabling easy electrolyte injection. That is, according to the present embodiment, the guide protrusion portion 1550 may serve to prevent an internal element from moving upward and blocking the extension flow path 1560.

If the extension flow path 1560 is formed as a groove on the upper surface of the insulating element 1460 or formed as an internal groove, a hole (connection hole) connecting the upper surface and the lower surface may be required. However, it may be difficult for such a connecting hole to provide a large bottom opening area. Furthermore, if the hole becomes blocked, problems such as a drop in injection speed or backflow may occur. Additionally, the presence of the hole may induce deformation of the insulating element 1460.

A protrusion (referred to as lower protrusion) 1415 inserted into the concave portion 1510 may be formed at a lower portion (e.g., the second/lower surface) of the cap plate 1410. The lower protrusion 1415 may, e.g., be formed in a truncated cone shape having an outer diameter gradually decreasing toward its lower portion. The accommodation space 1580 configured to accommodate an electrolyte may be formed between the lower protrusion 1415 and the bottom plate 1512 of the concave portion 1510. A smallest height T21 of the accommodation space 1580 may be 0.25 to 4 times a thickness T22 (e.g., height from the first/upper surface of the cap plate 1410) of the lower protrusion 1415, e.g., as measured along the direction from the second surface to the first surface of the insulating element 1460 (z-axis direction). The accommodation space 1580 may be connected to the extension flow path 1560 and deliver an electrolyte to the extension flow path 1560. As used herein, the thickness T22 of the lower protrusion 1415 may refer to a distance from an upper surface of the cap plate 1410 to a lower end of the lower protrusion 1415.

An outer surface (e.g., an outer/lower surface of a side) of the lower protrusion 1415 may be spaced apart from an inner surface (e.g., an inner/upper surface of a side) of the concave portion 1510, such that a distribution space 1585 in an, e.g., annular shape, in which an electrolyte may be temporarily accommodated, is formed between the lower protrusion 1415 and the concave portion 1510. The distribution space 1585 is formed to have a height greater than a greatest height of the accommodation space 1580.

The distribution space 1585 is connected to the accommodation space 1580 and the side hole 1530 and may distribute the electrolyte. The electrolyte that has moved to the distribution space 1585 may be uniformly distributed and supplied to the extension flow path 1560 through the side hole 1530. Accordingly, the electrolyte is uniformly supplied to each of the extension flow paths 1560, enabling rapid injection of the electrolyte.

As in the first embodiment, with the injection guide 1500 formed, the electrolyte may be easily injected into the casing 1100. The electrolyte injected through the electrolyte injection port H1 may be accommodated in the concave portion 1510, and move into the casing 1100 through the internal hole 1520. If an inside of the internal hole 1520 is blocked by foreign matter or the like, the electrolyte may move to an outside of the concave portion 1510 through the accommodation space 1580, and then be injected into the casing 1100 through the side hole 1530.

If the side holes 1530 are blocked by an internal structure, the electrolyte may move outward through the extension flow path 1560 connected to the side holes 1530 and be injected into the casing 1100. As described above, according to the first embodiment, the electrolyte may be easily injected into the casing 1100 through various paths.

The electrolyte may for example be injected through an injection nozzle, or may be injected due to a pressure difference created when an inside of the casing 1100 is depressurized to a pressure lower than atmospheric pressure.

If the electrolyte is injected by the pressure difference, a pressure delivery path should be secured. According to the first embodiment, the pressure delivery path may be secured through the internal hole 1520, the side hole 1530, and the extension flow path 1560, such that electrolyte injection time may be reduced.

FIG. 11 is a cross-sectional view illustrating an exhaust portion of the insulating element according to the first embodiment of the present disclosure.

Referring to FIG. 11, the exhaust portion 1465 may be positioned below the vent hole H2 and may include a plurality of discharge openings. The exhaust portion 1465 may include: a support frame 1465e configured to protrude downward and formed in an annular shape; and, optionally, a plurality of divided bars 1465d fixed to the support frame 1465e and configured to extend in the width direction (x-axis direction) of the insulating element 1460. A first discharge opening 1465a may be formed at a center of the exhaust portion 1465, and a second discharge opening 1465b and a third discharge opening 1465c may be formed on opposite sides of the first discharge opening 1465a. The first discharge opening 1465a may have a larger cross-sectional area than the second discharge opening 1465b and the third discharge opening 1465c.

As described above, with the exhaust portion 1465 formed in the insulating element 1460, in response to an increase in an internal pressure of the casing 1100, the vent element 1411 may be ruptured at a preset pressure, such that gas inside the casing 1100 may be easily discharged.

A secondary battery according to a second embodiment of the present disclosure will be described below.

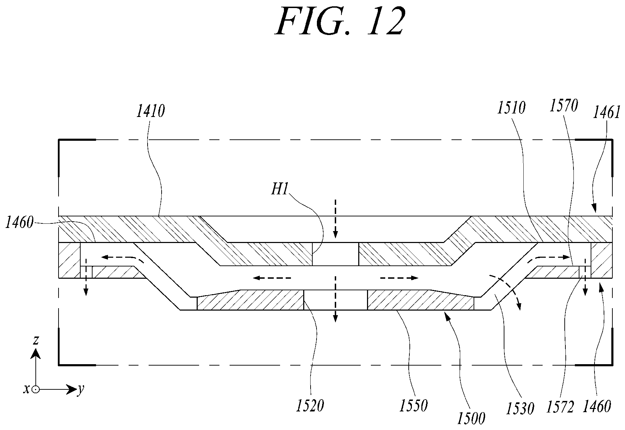

FIG. 12 is a partial cross-sectional view illustrating a cap plate and an insulating element according to the second embodiment of the present disclosure.

Referring to FIG. 12, the secondary battery according to the second embodiment of the present disclosure has the same structure as the secondary battery according to the first embodiment described above except for an extension flow path (extension flow passage) 1570. Accordingly, a redundant description of the same component will be omitted.

In addition, the extension flow path 1570 may be formed in a groove shape recessed from a surface of the insulating element 1460. The insulating element 1460 may include the outer surface (first surface) oriented toward the cap plate 1410 and the inner surface (second surface) oriented toward the electrode assembly 1200. The extension flow path 1570 may be formed on the outer surface of the insulating element 1460, and may be open upward toward the cap plate 1410.

One side end portion of the extension flow path 1570 in a longitudinal direction may be connected to the side hole 1530. The insulating element 1460 may be formed with a connection hole 1572 connected to the extension flow path 1570. The connection hole 1572 is open toward the electrode assembly 1200.

The insulating element 1460 may be formed with a plurality of the extension flow paths 1570, and the extension flow paths 1570 may be radially disposed. The extension flow path 1570 may be substantially connected to the upper end of the side hole 1530 and form an additional path extending outward from the side hole 1530. The electrolyte introduced into the extension flow path 1570 may move toward the electrode assembly 1200 through the connection hole 1572.

A secondary battery according to a third embodiment of the present disclosure will be described below.

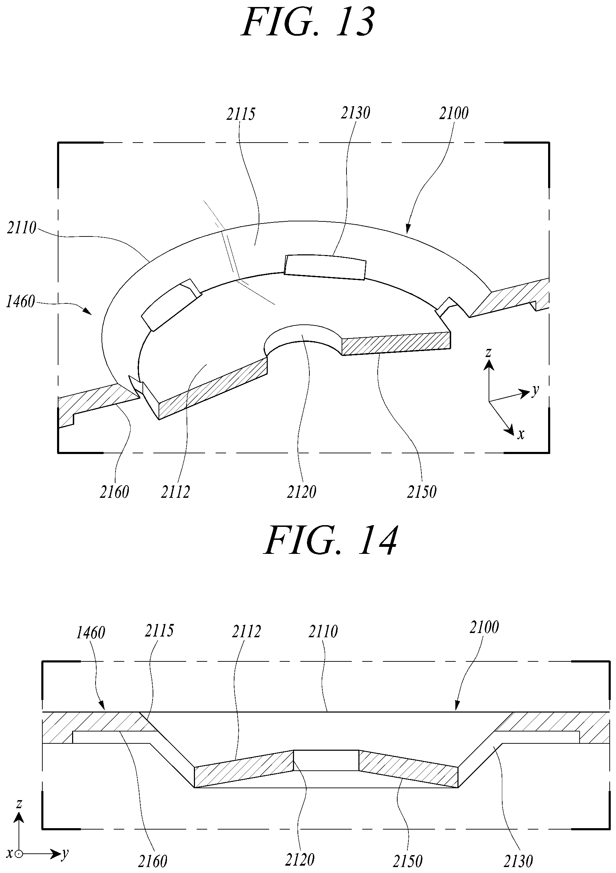

FIG. 13 is a cutaway perspective view illustrating an injection guide according to the third embodiment of the present disclosure (e.g., viewed from above onto the first/upper surface of the insulating element 1460). FIG. 14 is a cross-sectional view illustrating the injection guide according to the third embodiment of the present disclosure.

Referring to FIGS. 13 and 14, the secondary battery according to the third embodiment of the present disclosure has the same structure as the secondary battery according to the first embodiment described above except for an injection guide 2100. Accordingly, a redundant description of the same component will be omitted.

The insulating element 1460 may be formed with the injection guide 2100, and the injection guide 2100 may include a concave portion 2110, an internal hole (central hole) 2120, a side hole 2130, and an extension flow path 2160. The concave portion 2110 is positioned in a lower space corresponding to the electrolyte injection port H1 and is configured in a structure concavely recessed toward the electrode assembly 1200 (e.g., forming a recess in the first surface of the insulating element 1460). The concave portion 2110 may include a bottom plate (bottom) 2112 positioned at a lower portion and a side surface (side) 2115 configured to connect the bottom plate 2112 to the insulating element 1460. The side surface 2115 may be disposed to be inclined with respect to the inner surface (second surface) of the insulating element 1460.

The concave portion 2110 (e.g., the recess formed thereby) may be formed to have an inner diameter gradually decreasing toward the electrode assembly 1200. In addition, a guide protrusion portion (guide protrusion) 2150 configured to protrude convexly toward the electrode assembly 1200 may be formed on an opposite side of the concave portion 2110 (e.g., on the second/lower surface of the insulating element 1460).

The bottom plate 2112 may be formed in a disc shape. The bottom plate 2112 may be formed to gradually protrude, from an outer side of the bottom plate 2112 toward a center of the same, toward the cap plate 1410. Accordingly, a depth of the concave portion 2110 (e.g., a depth of the recess formed thereby) may gradually increase from a radial center of the concave portion 2110 toward an outer side of the same. The bottom plate 2112 may have a uniform thickness. The bottom plate 2112 may be formed to be inclined with respect to an upper surface of an insulating element 1460.

The internal hole (central hole) 2120 may be positioned at a center of the bottom plate 2112 of the concave portion 2110. The internal hole 2120 may be formed to face the electrolyte injection port H1. The side hole 2130 may be formed in the side surface 2115, and a plurality of the side holes 2130 may be disposed to be spaced apart from each other at intervals in a peripheral direction of the side surface 2115. The extension flow path 2160 may be connected to the side hole 2130, and may, e.g., be formed in a groove shape recessed from the inner surface (second surface) of the insulating element 1460.

According to the third embodiment, an electrolyte supplied to the concave portion 2110 may move into the casing 1100 through the internal hole 2120. An electrolyte that has not moved through the internal hole 2120 may move to the outside of the inclined bottom plate 2112, and move into the casing 1100 through the side hole 2130. In addition, an electrolyte that has not moved through the side hole 2130 may move into the casing 1100 through the extension flow path 2160.

A secondary battery according to a fourth embodiment of the present disclosure will be described below.

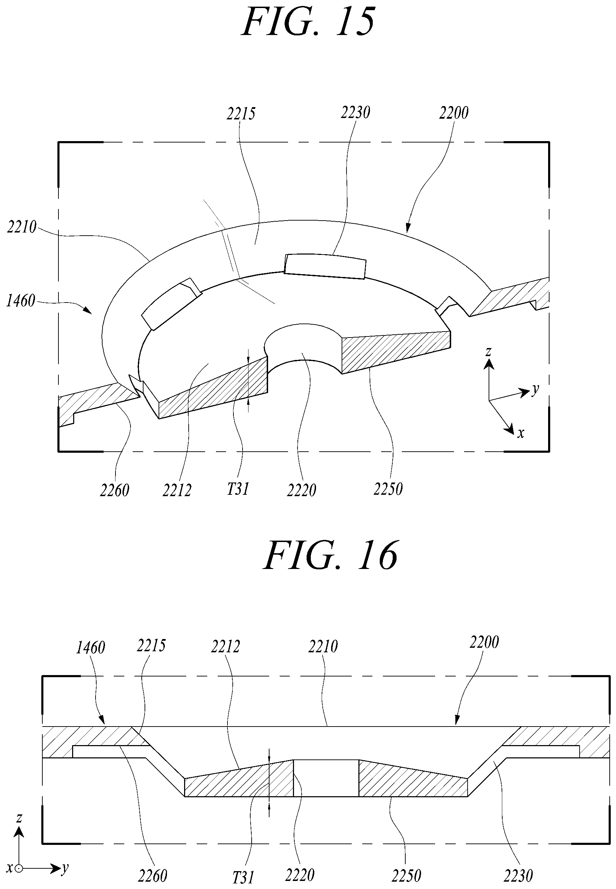

FIG. 15 is a cutaway perspective view illustrating an injection guide according to the fourth embodiment of the present disclosure (e.g., viewed from above onto the first/upper surface of the insulating element 1460). FIG. 16 is a cross-sectional view illustrating the injection guide according to the fourth embodiment of the present disclosure.

Referring to FIGS. 15 and 16, the secondary battery according to the fourth embodiment of the present disclosure has the same structure as the secondary battery according to the first embodiment described above except for an injection guide 2200. Accordingly, a redundant description of the same component will be omitted.

The insulating element 1460 may be formed with the injection guide 2200, and the injection guide 2200 may include a concave portion 2210, an internal hole (central hole) 2220, a side hole 2230, and an extension flow path (extension flow passage) 2260. The concave portion 2210 is positioned in a lower space corresponding to the electrolyte injection port H1 and is configured in a structure concavely recessed toward the electrode assembly 1200. The concave portion 2210 includes a bottom plate (bottom) 2212 positioned at a lower portion and a side surface (side) 2215 configured to connect the bottom plate 2212 to the insulating element 1460. The side surface 2215 is disposed to be inclined with respect to the inner surface of the insulating element 1460.

The concave portion 2210 may be formed to have an inner diameter gradually decreasing toward the electrode assembly 1200. In addition, a guide protrusion portion (guide protrusion) 2250 configured to protrude convexly toward the electrode assembly 1200 may be formed on an opposite side of the concave portion 2210 (e.g., on the second/lower surface of the insulating element 1460).

The bottom plate 2212 may be formed in a disc shape. The bottom plate 2212 may be formed to have a thickness T31 gradually decreasing from a radial center of the bottom plate 2212 toward an outer side of the same. Accordingly, a depth of the concave portion 2210 may gradually increase from a center of the concave portion 2210 toward an outer side of the same.

In addition, the internal hole 2220 may be positioned at a center of the bottom plate 2212 of the concave portion 2210. The internal hole 2220 may be formed to face the electrolyte injection port H1. The side hole 2230 may be formed in the side surface 2215, and a plurality of the side holes 2230 may be disposed to be spaced apart from each other at intervals in a peripheral direction of the side surface 2215. The extension flow path 2260 may be connected to the side hole 2230, and may be formed in a groove shape recessed from the inner surface of the insulating element 1460.

According to the fourth embodiment, an electrolyte supplied to the concave portion 2210 may move into the casing 1100 through the internal hole 2220, and an electrolyte that has not moved through the internal hole 2220 may move to the outside of the inclined bottom plate 2212 and move into the casing 1100 through the side hole 2230. In addition, an electrolyte that has not moved through the side hole 2230 may move into the casing 1100 through the extension flow path 2260.

A secondary battery according to a fifth embodiment of the present disclosure will be described below.

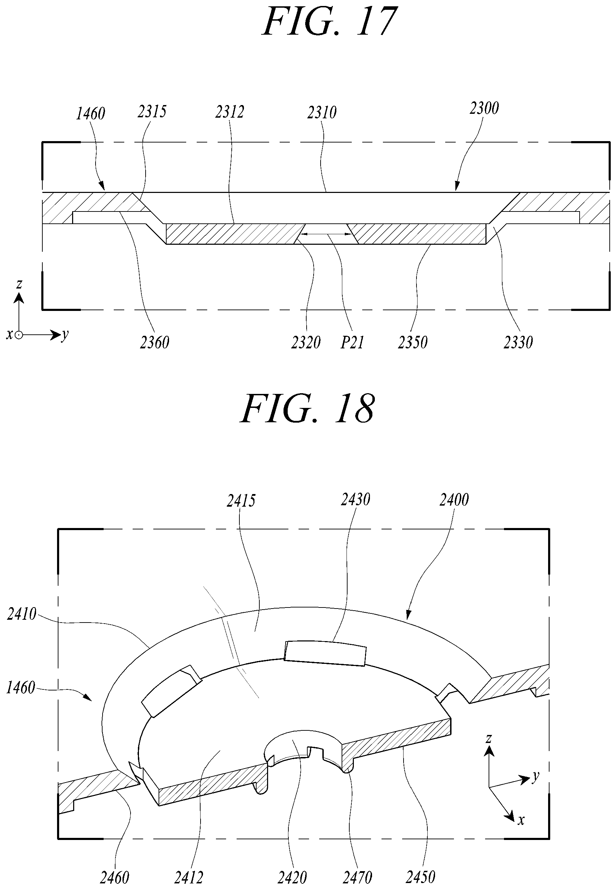

FIG. 17 is a cross-sectional view illustrating an injection guide according to the fifth embodiment of the present disclosure.

Referring to FIG. 17, the secondary battery according to the fifth embodiment of the present disclosure has the same structure as the secondary battery according to the first embodiment described above except for an injection guide 2300. Accordingly, a redundant description of the same component will be omitted.

The insulating element 1460 may be formed with the injection guide 2300, and the injection guide 2300 may include a concave portion 2310, an internal hole (central hole) 2320, a side hole 2330, and an extension flow path (extension flow passage) 2360.

The concave portion 2310 is positioned in a lower space corresponding to the electrolyte injection port H1 and is configured in a structure concavely recessed toward the electrode assembly 1200. The concave portion 2310 may be formed to have an inner diameter gradually decreasing toward the electrode assembly 1200. In addition, a guide protrusion portion (guide protrusion) 2350 configured to protrude convexly inward may be formed on an opposite side of the concave portion 2310. The concave portion 2310 includes a bottom plate (bottom) 2312 positioned at a lower portion and a side surface (side) 2315 configured to connect the bottom plate 2312 to the insulating element 1460. The side surface 2315 is disposed to be inclined with respect to the inner surface of the insulating element 1460.

In addition, the internal hole 2320 may be positioned at a center of the bottom plate 2312 of the concave portion 2310, and may be formed to face the electrolyte injection port H1. The side hole 2330 may be formed in the side surface 2315, and a plurality of the side holes 2330 may be disposed to be spaced apart from each other at intervals in a peripheral direction of the side surface 2315. The extension flow path 2360 may be connected to the side hole 2330, and may be formed in a groove shape recessed from the inner surface of the insulating element 1460.

The internal hole 2320 may be formed to have a diameter D21 gradually increasing toward its lower portion. Accordingly, a movement speed of an electrolyte in the internal hole 2320 may decrease. The decrease in the electrolyte movement speed may prevent deformation of an upper portion of the separator 1213 caused by impact of the electrolyte.

A secondary battery according to a sixth embodiment of the present disclosure will be described below.

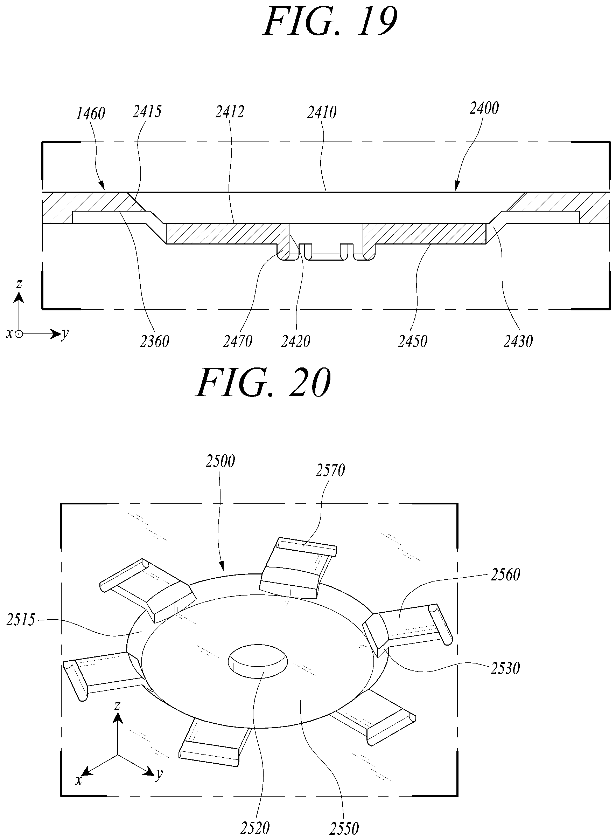

FIG. 18 is a cutaway perspective view illustrating an injection guide according to the sixth embodiment of the present disclosure (e.g., viewed from above onto the first/upper surface of the insulating element 1460). FIG. 19 is a cross-sectional view illustrating the injection guide according to the sixth embodiment of the present disclosure.

Referring to FIGS. 18 and 19, the secondary battery according to the sixth embodiment of the present disclosure has the same structure as the secondary battery according to the first embodiment described above except for an injection guide 2400. Accordingly, a redundant description of the same component will be omitted.

The insulating element 1460 may be formed with the injection guide 2400, and the injection guide 2400 may include a concave portion 2410, an internal hole (central hole) 2420, a side hole 2430, and an extension flow path (extension flow passage) 2460.

The concave portion 2410 is positioned in a lower space corresponding to the electrolyte injection port H1 and is configured in a structure concavely recessed toward the electrode assembly 1200. The concave portion 2410 may be formed to have an inner diameter gradually decreasing toward the electrode assembly 1200. In addition, a guide protrusion portion (guide protrusion) 2450 configured to protrude convexly inward may be formed on an opposite side of the concave portion 2410. The concave portion 2410 includes a bottom plate (bottom) 2412 positioned at a lower portion and a side surface (side) 2415 configured to connect the bottom plate 2412 to the insulating element 1460, and the side surface 2415 is disposed to be inclined with respect to the inner surface of the insulating element 1460.

In addition, the internal hole 2420 may be positioned at a center of the bottom plate 2412 of the concave portion 2410, and may be formed to face the electrolyte injection port H1. The side hole 2430 may be formed in the side surface 2415, and a plurality of the side holes 2430 may be disposed to be spaced apart from each other at intervals in a peripheral direction of the side surface 2415. The extension flow path 2460 may be connected to the side hole 2430, and may be formed in a groove shape recessed from the inner surface of the insulating element 1460.

A spacing protrusion (first spacing protrusion) 2470 may be formed on a lower portion of the guide protrusion portion (guide protrusion) 2450 (e.g., a second/lower surface of an end face of the guide protrusion 2450). The spacing protrusion 2470 may be disposed adjacent to a lower end of the internal hole 2420 (e.g., at an outer circumference of the internal hole 2420). The spacing protrusion 2470 may protrude toward the electrode assembly 1200 and may form a gap between an internal structure and the lower end of the internal hole 2420. A plurality of the spacing protrusions 2470 may be disposed, on the lower portion of the guide protrusion portion 2450, to be spaced apart from each other in a peripheral direction of the internal hole 2420.

As in the sixth embodiment, with the spacing protrusion 2470 formed on a lower portion of the internal hole 2420, the spacing protrusion 2470 may form a gap between the internal structure and the lower end of the internal hole 2420, and an electrolyte may move into the casing 1100 through the gap formed by the spacing protrusion 2470.

A secondary battery according to a seventh embodiment of the present disclosure will be described below.

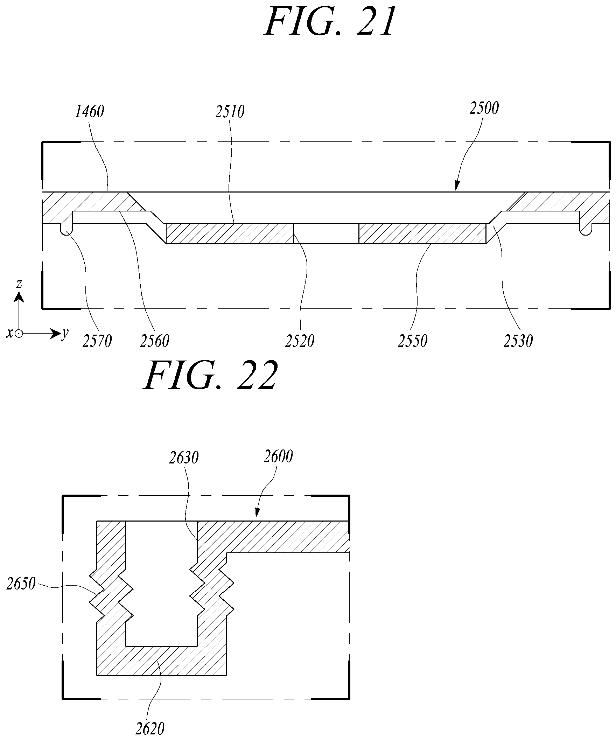

FIG. 20 is a cutaway perspective view illustrating an injection guide according to the seventh embodiment of the present disclosure (e.g., viewed from below onto the second/lower surface of the insulating element 1460). FIG. 21 is a cross-sectional view illustrating the injection guide according to the seventh embodiment of the present disclosure.

Referring to FIGS. 20 and 21, the secondary battery according to the seventh embodiment of the present disclosure has the same structure as the secondary battery according to the first embodiment described above except for an injection guide 2500. Accordingly, a redundant description of the same component will be omitted.

The insulating element 1460 may be formed with the injection guide 2500, and the injection guide 2500 may include a concave portion 2510, an internal hole (central hole) 2520, a side hole 2530, and an extension flow path (extension flow passage) 2560.

The concave portion 2510 is positioned in a lower space corresponding to the electrolyte injection port H1 and is configured in a structure concavely recessed toward the electrode assembly 1200. The concave portion 2510 may be formed to have an inner diameter gradually decreasing toward the electrode assembly 1200. In addition, a guide protrusion portion 2550 configured to protrude convexly inward may be formed on an opposite side of the concave portion 2510. The concave portion 2510 includes a bottom plate (bottom) 2512 positioned at a lower portion and a side surface (side) 2515 configured to connect the bottom plate 2512 to the insulating element 1460, and the side surface 2515 is disposed to be inclined with respect to the inner surface of the insulating element 1460.

In addition, the internal hole 2520 may be positioned at a center of the bottom plate 2512 of the concave portion 2510, and may be formed to face the electrolyte injection port H1. The side hole 2530 may be formed in the side surface 2515, and a plurality of the side holes 2530 may be disposed to be spaced apart from each other at intervals in a peripheral direction of the side surface 2515. The extension flow path 2560 may be connected to the side hole 2530, and may be formed in a groove shape recessed from the inner surface of the insulating element 1460.

The injection guide 2500 may further include an extension protrusion (second spacing protrusion) 2570 formed on a longitudinal outer side of the extension flow path 2560 (e.g., at a distal end of the extension flow path 2560 as seen from the concave portion 2510). The extension protrusion 2570 may be configured to protrude toward the electrode assembly 1200. The extension protrusion 2570 may protrude downward from the outer side of the extension flow path 2560 and may form a gap between an internal structure and a lower end of the extension flow path 2560.

As in the seventh embodiment, with the extension protrusion 2570 formed on a lower portion of the extension flow path 2560, the extension protrusion 2570 may form a gap between the internal structure and the lower end of the extension flow path 2560, and an electrolyte may move into the casing 1100 through the gap formed by the extension protrusion 2570.

A secondary battery according to an eighth embodiment of the present disclosure will be described below.

FIG. 22 is a cross-sectional view illustrating a buffer protrusion of an insulating element according to the eighth embodiment of the present disclosure.

Referring to FIG. 22, the secondary battery according to the eighth embodiment of the present disclosure has the same structure as the secondary battery according to the first embodiment described above except for an insulating element 2600. Accordingly, a redundant description of the same component will be omitted.

Two buffer protrusions 2620 configured to protrude downward toward the electrode assembly 1200 may be formed on longitudinal opposite edges (e.g., short edges) of the insulating element 2600. An outer groove (outer recess) 2630 may be formed on an outer side of the buffer protrusion 2620 that is oriented toward the cap plate 1410.

The buffer protrusion 2620 may be formed in a cup shape configured to protrude downward, and the buffer protrusion 2620 may be formed with a corrugated pipe 2650 (e.g., as an example of a flexible corrugated structure). The corrugated pipe 2650 may be configured in a flexible structure, and may be formed in a bellows shape. In addition, a lower end of the buffer protrusion 2620 may be installed to contact the electrode assembly 1200.

As in the eighth embodiment, with the buffer protrusion 2620 formed with the corrugated pipe 2650 and contacting the electrode assembly 1200, in response to impact being applied to the secondary battery or the secondary battery moving abruptly, the buffer protrusion 2620 may stably support the electrode assembly 1200, such that damage to the electrode assembly 1200 may be prevented.

A secondary battery according to a ninth embodiment of the present disclosure will be described below.

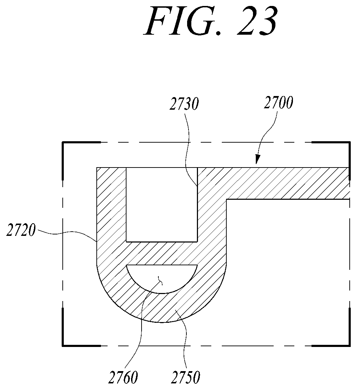

FIG. 23 is a cross-sectional view illustrating a buffer protrusion of an insulating element according to the ninth embodiment of the present disclosure.

Referring to FIG. 23, the secondary battery according to the ninth embodiment of the present disclosure has the same structure as the secondary battery according to the first embodiment described above except for an insulating element 2700. Accordingly, the same description of the same structure will be omitted.

Two buffer protrusions 2720 configured to protrude downward toward the electrode assembly 1200 may be formed on longitudinal opposite edges of the insulating element 2700. An outer groove (outer recess) 2730 may be formed on an outer side of the buffer protrusion 2720 that is oriented toward the cap plate 1410.

The buffer protrusion 2720 is formed in a cup shape configured to protrude downward, and an electrode support portion 2750 configured to protrude toward the electrode assembly 1200 may be formed at an inner end of the buffer protrusion 2720 that is oriented toward the electrode assembly 1200. The electrode support portion 2750 may be configured in an arcuate structure, and may have a substantially semicircular cross section. A buffer space 2760 configured to absorb impact may be formed between the electrode support portion 2750 and the buffer protrusion 2720. Here, the electrode support portion 2750 may be configured to be easily deformable, and the electrode support portion 2750 may be formed to have a smaller thickness than the buffer protrusion 2720.

As in the ninth embodiment, with the electrode support portion 2750 and the buffer space 2760 formed, in response to impact being applied to the secondary battery, the electrode support portion 2750 may support the electrode assembly 1200, such that damage to the electrode assembly 1200 may be prevented.

A secondary battery according to a tenth embodiment of the present disclosure will be described below.

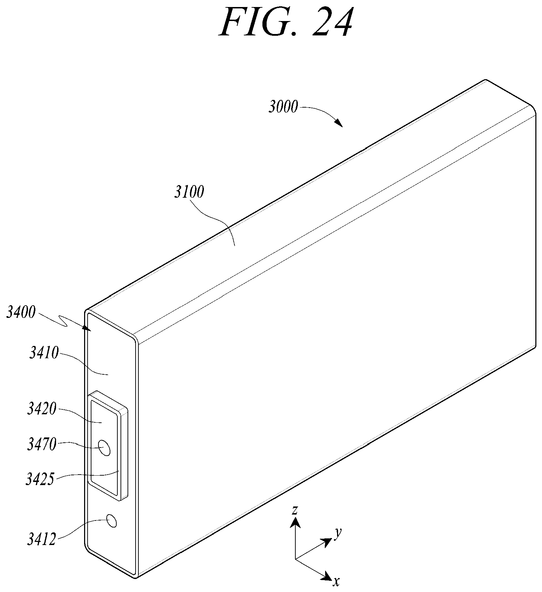

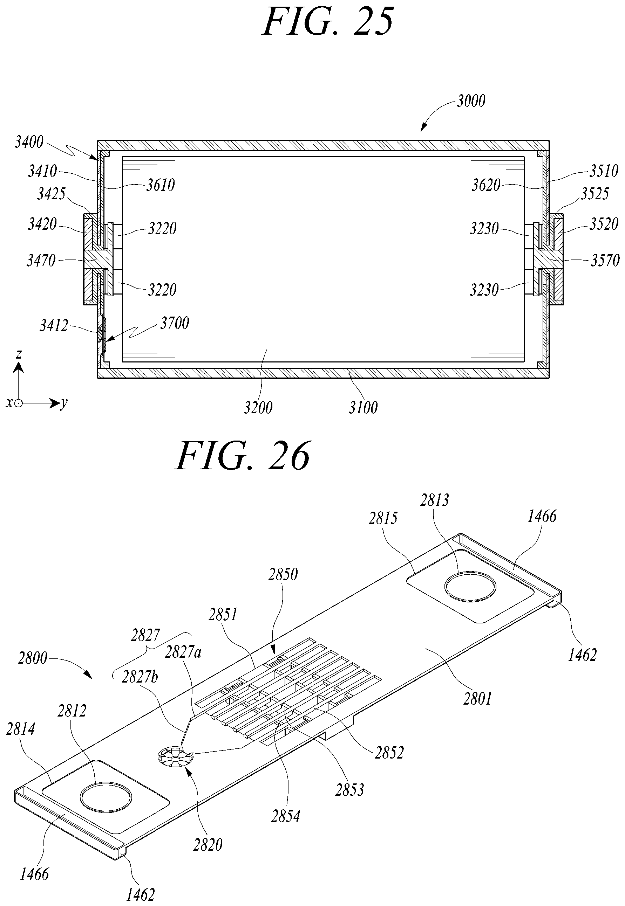

FIG. 24 is a perspective view illustrating a secondary battery according to the tenth embodiment of the present disclosure. FIG. 25 is a cross-sectional view illustrating the secondary battery according to the tenth embodiment of the present disclosure.

Referring to FIG. 24 and FIG. 25, a secondary battery 3000 according to the tenth embodiment has the same or similar structure as the secondary battery according to the first embodiment described above except for the configuration of a casing 3100, a first cap assembly 3400, a second cap assembly 3500, and an electrode tab. Accordingly, a redundant description of the same or similar component will be omitted.

The secondary battery 3000 may include an electrode assembly 3200, the casing 3100, the first cap assembly 3400, and the second cap assembly 3500.

The electrode assembly 3200 performs charging and discharging, and includes a positive electrode tab 3220 configured to protrude in a first direction and a negative electrode tab 3230 configured to protrude in a second direction opposite to the first direction. The electrode assembly 3200 may include a plurality of positive electrode tab arrays and two negative electrode tab arrays.

The casing 3100 may have a tubular shape with both longitudinal ends open. The first cap assembly 3400 may be coupled to one longitudinal side end portion of the casing 3100, and the second cap assembly 3500 may be coupled to a remaining longitudinal side end portion of the casing 3100.

The first cap assembly 3400 may include a first cap plate 3410 coupled to the casing 3100. The first cap assembly 3400 may further include a first terminal 3420 installed on the first cap plate 3410, and/or a first current collecting element 3470 fixed to the first terminal 3420 and coupled to the positive electrode tab 3220. The first terminal 3420 may be formed in a plate shape, and may protrude outward from the first cap plate 3410. A gasket 3425 for insulation may be installed between the first terminal 3420 and the first cap plate 3410. The first current collecting element 3470 may be inserted into the first terminal 3420 and coupled, e.g., by welding, to the positive electrode tab 3220.

A first insulating element 3610 may be disposed inside the first cap plate 3410, and the first insulating element 3610 may be positioned between the first cap plate 3410 and the electrode assembly 3200.

An electrolyte injection port for electrolyte injection may be formed in the first cap plate 3410, and a sealing plug 3412 may be installed in the electrolyte injection port. The first insulating element 3610 may include an injection guide 3700, and the injection guide 3700 may be configured in the same structure as the injection guide according to the first embodiment described above.

In addition, the second cap assembly 3500 may include a second cap plate 3510 coupled to the casing 3100. The second cap assembly 3500 may include a second terminal 3520 installed on the second cap plate 3510, and/or a second current collecting element 3570 fixed to the second terminal 3520 and coupled to the negative electrode tab 3230. The second terminal 3520 may be formed in a plate shape, and may protrude outward from the second cap plate 3510. A gasket 3525 for insulation may be installed between the second terminal 3520 and the second cap plate 3510. The second current collecting element 3570 may be inserted into the second terminal 3520 and coupled, e.g., by welding, to the negative electrode tab 3230. A second insulating element 3620 may be disposed inside the second cap plate 3510, and the second insulating element 3620 may be positioned between the second cap plate 3510 and the electrode assembly 3200.A secondary battery according to an eleventh embodiment of the present disclosure will be described below.

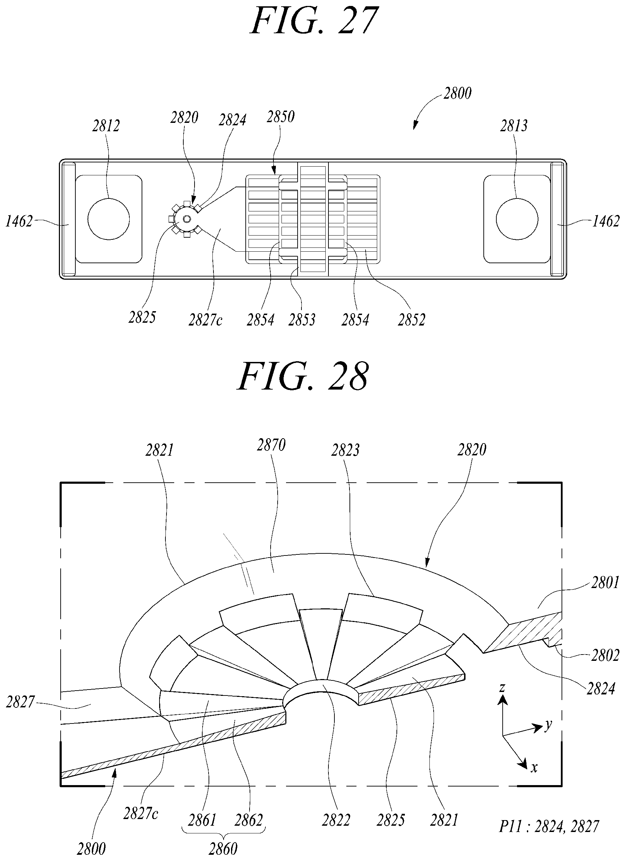

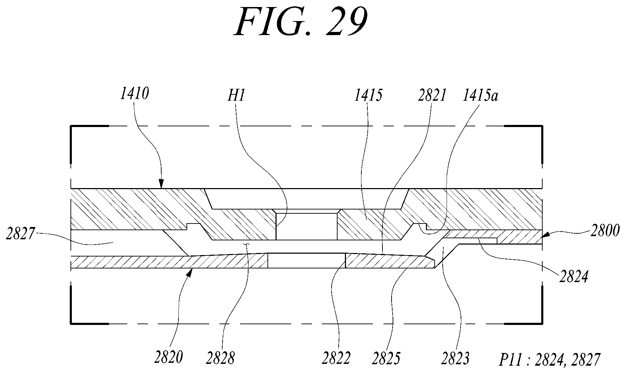

FIG. 26 is a perspective view illustrating an insulating element of the secondary battery according to the eleventh embodiment of the present disclosure, when viewed from above (e.g., onto the first/upper surface 2801 of the insulating element 2800). FIG. 27 is a bottom view illustrating an insulating element of the secondary battery according to the eleventh embodiment of the present disclosure (e.g., viewed onto the second/lower surface 2802 of the insulating element 2800). FIG. 28 is a cutaway perspective view illustrating an injection guide of the insulating element according to the eleventh embodiment of the present disclosure (e.g., viewed from above onto the first/upper surface 2801 of the insulating element 2800). FIG. 29 is a partial cross-sectional view illustrating a cap plate and the insulating element according to the eleventh embodiment of the present disclosure.

Referring to FIG. 26 to FIG. 29, a secondary battery 3000 according to the eleventh embodiment has the same or similar structure as the secondary battery according to the first embodiment described above except for an insulating element 2800. Accordingly, a redundant description of the same component will be omitted.

An injection guide 2820 may be formed on an insulating element 2800, and the injection guide 2820 may include a concave portion 2821, an internal hole (central hole) 2822, a side hole 2823, and an extension flow path (extension flow passage) P11.

The insulating element 2800 may be formed with some or all of a first hole 2812 into which a first terminal 1420 is inserted, a second hole 2813 into which a second terminal 1430 is inserted, and grooves 2814 and 2815 into which lower parts of gaskets 1425 and 1435 are inserted.

The concave portion 2821 is positioned in a lower space corresponding to the electrolyte injection port H1 and is configured in a structure concavely recessed toward the electrode assembly 1200. A guide protrusion portion 2825 configured to protrude convexly inward may be formed on an opposite side of the concave portion 2821.

Meanwhile, a protrusion (lower protrusion) 1415 inserted into the concave portion 2821 is formed at a lower portion of the cap plate 1410 (as an example of a cap). The lower protrusion 1415 may be formed in a truncated cone shape having an outer diameter gradually decreasing toward its lower portion.

An accommodation space 2828 configured to accommodate an electrolyte may be formed between the lower protrusion 1415 and the bottom plate (bottom) 2860 of the concave portion 2821.

A groove 1415a, extending in a peripheral direction of the lower protrusion 1415 (e.g., along an outer circumference thereof) and surrounding the lower protrusion 1415, may be formed on a surface (second/lower surface) of the cap plate 1410 that faces the electrode assembly 1200.

The groove 1415a may be recessed from a lower surface of the cap plate 1410 and may be connected to an outer surface (e.g., a side) of the lower protrusion 1415.

The concave portion 2821 may include a bottom plate (bottom) 2860 positioned at a lower portion and a side surface (side) 2870 configured to connect the bottom plate 2860 to a first surface (upper/outer surface) 2801 of the insulating element 1460, and the side surface 2870 is disposed to be inclined with respect to an inner surface (e.g., the second/lower surface) of the insulating element 2800.

The bottom plate 2860 may include a plurality of first portions 2861 parallel to the first surface 2801 of the insulating element 2800 and a plurality of second portions 2862 inclined with respect to the first surface 2801 of the insulating element 2800. The first portions 2861 and the second portions 2862 may be alternately arranged, and the second portions 2862 may be positioned between (and thus separated from each other by) the first portions 2861.

A thickness of the second portion 2862 may gradually decrease toward a radial outer side of the concave portion 2821 in some examples.

The internal hole (central hole) 2822 may be positioned at a center of a bottom of the concave portion 2821 and may be formed to face the electrolyte injection port H1. A plurality of side holes 2823 may be formed in the side surface 2870 of the concave portion 2821.

The plurality of side holes 2823 may be disposed to be spaced apart from each other at intervals in a peripheral direction of the side surface 2870.

The extension flow path (extension flow passage) P11 may include a first extension flow path (first extension flow passage) 2824 and a second extension flow path (second extension flow passage) 2827. The first extension flow path 2824 and the second extension flow path 2827 may be formed on surfaces facing opposite directions from each other.

One or both of the first extension flow path 2824 and the second extension flow path 2827 may be formed as a single path (single first/second extension flow passage) or a plurality of paths (plurality of first/second extension flow passages).

The first extension flow path 2824 may be formed on a second surface 2802 of the insulating element 2800 that faces the electrode assembly 1200. The second extension flow path 2827 may be formed on a first surface 2801 of the insulating element 2800 that faces the cap plate 1410.

If the first extension flow path 2824 and the second extension flow path 2827 are formed on surfaces facing opposite directions, even if one surface is blocked, an electrolyte may easily move through the other surface.

The first extension flow paths 2824 may be connected to the side holes 2823. The first extension flow paths 2824 may be formed in a groove shape recessed from the second surface 2802

A plurality of the first extension flow paths 2824 may be disposed to be spaced apart in a peripheral direction of the concave portion 2821 on the second surface 2802. The first extension flow paths 2824 may each be connected to a respective one of the second portions 2862.

The second extension flow path 2827 may be connected to an exhaust portion 2850. The exhaust portion 2850 may be spaced apart from the concave portion 2821 in a longitudinal direction of the insulating element 2800.

The second extension flow path 2827 may be formed in a groove shape recessed from the first surface 2801 that faces the cap plate 1410.

The second extension flow path 2827 may be connected to one of the second portions 2862.

The second extension flow path 2827 may include a first extension portion (first portion) 2827a having a width that increases as a distance from the concave portion 2821 increases, and, optionally, a second extension portion (second portion) 2827b having a uniform width and connecting the first extension portion 2827a and the exhaust portion 2850.

A flow path protrusion 2827c may be formed below the second extension flow path 2827 on the second surface 2802. The flow path protrusion 2827c may be connected to the guide protrusion portion 2825.

The second extension flow path 2827 may extend from the concave portion 2821 toward the exhaust portion 2850 to connect the concave portion 2821 and the exhaust portion 2850. The second extension flow path 2827 may be connected to a discharge opening 2851 (e.g., as an example of a connection hole).

An exhaust portion 1465 may be positioned below a vent hole H2 and may have the discharge opening 2851. The exhaust portion 1465 may assist with gas discharge.

The exhaust portion 1465 may include a plurality of divided bars 1465 extending in the longitudinal direction of the insulating element 1460. The discharge opening 2851 may be divided into a plurality of openings by divided bars 2852.

The exhaust portion 2850 may include a first frame 2853 and two second frames 2854 disposed next to the first frame 2853.

The first frame 2853 and the second frames 2854 may extend in a width direction of the insulating element 2800.

The first frame 2853 and the second frames 2854 may protrude toward the electrode assembly 1200. The first frame 2853 may protrude further than the second frames 2854.

The first frame 2853 may be disposed at a center of the exhaust portion 2850 with respect to the longitudinal direction of the insulating element 2800.

The first frame 2853 and the second frames 2854 may improve strength of the insulating element 2800 and prevent deformation of the insulating element 2800.

When an electrolyte is injected into the concave portion 2821, a portion of the electrolyte moves through the internal hole 2822, a portion of the electrolyte moves through the first extension flow path 2824, and a portion of the electrolyte may move through the second extension flow path 2827 and the exhaust portion 2850.

Accordingly, even when a portion is blocked, the electrolyte may rapidly move to the electrode assembly 1200. In particular, since the second extension flow path 2827 is formed on the first surface 2801, which is an upper surface of the insulating element 2800, the electrolyte may easily move to the discharge opening 2851 through the second extension flow path 2827 even when the second surface is blocked by a lower structure.

With a secondary battery according to an embodiment of the present disclosure, an injection guide may be formed on an insulating element disposed below a cap plate, and the injection guide may include a concave portion and a side hole. Accordingly, even if a lower portion of an electrolyte injection port is blocked, an electrolyte may be easily injected through various paths.

An extension flow path (extension flow passage), which is connected to the side hole, may be formed on an outer side of the side hole. Accordingly, the electrolyte may be injected more rapidly and easily.

A lower protrusion, which is inserted into the concave portion, may be formed on the cap plate; an accommodation space may be formed between the lower protrusion and a bottom plate of the concave portion; and the accommodation space and the extension flow path may be connected. Accordingly, even if a portion of flow paths is blocked, the electrolyte may be rapidly injected through another portion of the flow paths.

Although an embodiment of the present disclosure has been described above, those skilled in the art may make various modifications and changes to the present disclosure by addition, modification, substitution, deletion, or supplementation of components, without departing from the spirit of the present disclosure set forth in the claims. Such modifications and changes should also be understood to fall within the scope of rights of the present disclosure.

In view of the above, it will be appreciated that the present disclosure also provides the itemized embodiments listed below. In addition to or instead of the features listed below, these itemized embodiments may also comprise any feature or combination of features described above for the secondary battery, the electrolyte injection inlet and the cap assembly according to the present disclosure (and vice-versa).
Embodiment 1. A secondary battery comprising:
   an electrode assembly comprising a positive electrode and a negative electrode;
   a casing into which the electrode assembly is inserted;
   a cap plate coupled to the casing and comprising an electrolyte injection port; and
   an insulating element disposed between the cap plate and the electrode assembly,
   wherein the insulating element comprises an injection guide facing the electrolyte injection port, and
   the injection guide comprises: a concave portion formed to be recessed in the insulating element and configured to accommodate an electrolyte; and at least one extension flow path connected to the concave portion, and configured to extend outward from the concave portion and form a space through which the electrolyte moves.
Embodiment 2. The secondary battery of embodiment 1, wherein the injection guide comprises at least one side hole configured to connect the concave portion and the extension flow path.
Embodiment 3. The secondary battery of embodiment 2, wherein the concave portion comprises a bottom plate and a side surface configured to connect the bottom plate to the insulating element, and the side hole passes through the side surface.
Embodiment 4. The secondary battery of embodiment 3, wherein the side hole comprises a first portion configured to pass through the side surface in a thickness direction of the side surface and a second portion recessed in a thickness direction of the insulating element.
Embodiment 5. The secondary battery of any one of embodiments 1 to 4, wherein an internal cross-sectional area of the concave portion gradually decreases toward the electrode assembly.
Embodiment 6. The secondary battery of any one of embodiments 3 to 5, wherein:
   the side surface is formed to be inclined with respect to a lower surface of the cap plate, and
   an inclination angle between a portion of the side surface that is oriented toward an inner side of the concave portion and a portion of the lower surface of the cap plate that faces the concave portion is 25 to 75 degrees.
Embodiment 7. The secondary battery of any one of embodiments 3 to 6, wherein a greatest width of the side surface is 1.25 to 5 times, optionally 1.25 to 2.45 times, a thickness of a portion of the insulating element that is connected to a longitudinal outer side of the extension flow path.
Embodiment 8. The secondary battery of any one of embodiments 3 to 7, wherein a greatest width of the side surface is 1.02 mm to 3.5 mm, optionally 1.02 mm to 1.82 mm.
Embodiment 9. The secondary battery of any one of embodiments 3 to 8, wherein the bottom plate comprises: a first bottom surface parallel to a lower surface of the cap plate; and a second bottom surface positioned outward of the first bottom surface and formed to be inclined downward with respect to the lower surface of the cap plate.
Embodiment 10. The secondary battery of any one of embodiments 3 to 9, wherein the bottom plate comprises a portion having a thickness gradually decreasing toward a radial outer side or a portion having a uniform thickness toward a radial outer side.
Embodiment 11. The secondary battery of any one of embodiments 3 to 10, wherein a lower protrusion inserted into the concave portion is formed on the cap plate, and an accommodation space through which an electrolyte moves is formed between the bottom plate and the lower protrusion.
Embodiment 12. The secondary battery of embodiment 11, wherein a smallest height of the accommodation space is 0.25 to 4 times a thickness of the lower protrusion.
Embodiment 13. The secondary battery of embodiment 11 or 12, wherein a height of the accommodation space is uniform, or is formed to gradually increase from an inner side toward an outer side.
Embodiment 14. The secondary battery of any one of embodiments 11 to 13, wherein a distribution space in an annular shape is formed between the lower protrusion and the concave portion, is formed higher than the accommodation space, and connects the accommodation space and the side hole.
Embodiment 15. The secondary battery of any one of embodiments 3 to 14, wherein the injection guide further comprises an internal hole formed in the bottom plate.
Embodiment 16. The secondary battery of embodiment 15, wherein a bottom gap between an outer end of the internal hole and an outer end of the bottom plate is formed to be greater than a diameter of the internal hole.
Embodiment 17. The secondary battery of embodiment 15, wherein a bottom gap between an outer end of the internal hole and an outer end of the bottom plate is 1.05 to 1.8 times a diameter of the internal hole or is 1.2 to 3.5 times a diameter of the internal hole.
Embodiment 18. The secondary battery of embodiment 16 or 17, wherein the bottom gap is 3.5 mm to 12.5 mm or is 8.5 mm to 16.5 mm.
Embodiment 19. The secondary battery of any one of embodiments 3 to 18, wherein a bottom groove, connected to the side hole and recessed inward from a side end of the bottom plate, is formed in the concave portion.
Embodiment 20. The secondary battery of any one of embodiments 1 to 19, wherein the extension flow path is formed as a groove recessed from an inner surface of the insulating element that faces the electrode assembly.
Embodiment 21. The secondary battery of any one of embodiments 1 to 20, wherein the injection guide comprises a plurality of the extension flow paths, and the extension flow paths extend radially from a center of the concave portion.
Embodiment 22. The secondary battery of any one of embodiments 1 to 21, wherein a length of the extension flow path is 0.15 to 0.6 times a smallest diameter of the concave portion or is 0.15 to 0.45 times a smallest diameter of the concave portion.
Embodiment 23. The secondary battery of any one of embodiments 1 to 22, wherein:
   the injection guide further comprises an internal hole formed at a bottom of the concave portion, and
   a length of the extension flow path is 0.4 to 1.5 times, optionally 0.8 to 1.2 times, a diameter of the internal hole.
Embodiment 24. The secondary battery of any one of embodiments 1 to 23, wherein a length of the extension flow path is 0.7 to 1.6 times a width of the extension flow path.
Embodiment 25. The secondary battery of any one of embodiments 1 to 24, wherein a length of the extension flow path is 1.5 mm to 6 mm, optionally 2 mm to 6 mm, and a width of the extension flow path is 2.5 mm to 6.5 mm.
Embodiment 26. The secondary battery of any one of embodiments 1 to 25, wherein a depth of the extension flow path is 0.15 to 0.5 times a thickness of a portion of the insulating element that is connected to a longitudinal outer side of the extension flow path.
Embodiment 27. The secondary battery of any one of embodiments 1 to 26, wherein a depth of the extension flow path is 0.02 to 0.35 times a length of the extension flow path.
Embodiment 28. The secondary battery of any one of embodiments 1 to 27, wherein a depth of the extension flow path is 0.1 mm to 0.5 mm.
Embodiment 29. The secondary battery of any one of embodiments 1 to 28, wherein a smallest diameter of the concave portion is 1.5 to 6.5 times, optionally 1.5 to 6 times, a diameter of the electrolyte injection port.
Embodiment 30. The secondary battery of any one of embodiments 1 to 29, wherein a smallest diameter of the concave portion is 7 mm to 16.5 mm, optionally 9 mm to 16.5 mm.
Embodiment 31. The secondary battery of any one of embodiments 1 to 30, wherein a greatest depth of the concave portion is 0.4 to 2.1 times, optionally 1.02 to 2.1 times, a thickness of a portion of the insulating element that is connected to a longitudinal outer side of the extension flow path.
Embodiment 32. The secondary battery of any one of embodiments 1 to 31, wherein a greatest depth of the concave portion is 0.5 mm to 2.4 mm.
Embodiment 33. The secondary battery of any one of embodiments 1 to 32, wherein the extension flow path is formed on an outer surface of the insulating element that faces the cap plate, and the injection guide is connected to the extension flow path and further comprises a connection hole opened toward the electrode assembly.
Embodiment 34. The secondary battery of any one of embodiments 1 to 33, wherein the injection guide further comprises an extension protrusion configured to protrude from a longitudinal outer side of the extension flow path toward the electrode assembly.
Embodiment 35. The secondary battery of any one of embodiments 1 to 34, wherein:
   the injection guide further comprises an internal hole formed at a bottom of the concave portion, and
   a guide protrusion portion configured to protrude toward the electrode assembly is formed on an opposite surface of the concave portion, and a spacing protrusion is formed on a lower portion of the guide protrusion portion and disposed adjacent to a lower end of the internal hole.
Embodiment 36. The secondary battery of any one of embodiments 1 to 35, wherein:
   a guide protrusion portion configured to protrude toward the electrode assembly is formed on an opposite surface of the concave portion, and
   the extension flow path is connected to an upper end of the guide protrusion where the guide protrusion meets a lower surface of the insulating element, and extends outwardly from the guide protrusion.
Embodiment 37. The secondary battery of any one of embodiments 1 to 36, wherein the insulating element further comprises a buffer protrusion configured to protrude toward the electrode assembly and support the electrode assembly.
Embodiment 38. The secondary battery of embodiment 37, wherein an outer groove is formed, in the insulating element, on an outer side of a portion formed with the buffer protrusion.
Embodiment 39. The secondary battery of embodiment 37 or 38, wherein the buffer protrusion comprises a flexible corrugated pipe.
Embodiment 40. The secondary battery of any one of embodiments 37 to 39, wherein an electrode support portion configured to protrude toward the electrode assembly is formed at an inner end portion of the buffer protrusion, and a buffer space configured to absorb impact is formed between the electrode support portion and the buffer protrusion.
Embodiment 41. The secondary battery of any one of embodiments 1 to 40, wherein the extension flow path comprises a first extension flow path and a second extension flow path formed on different surfaces of the insulating element.
Embodiment 42. The secondary battery of embodiment 41, wherein the first extension flow path and the second extension flow path are formed on surfaces of the insulating element that face opposite directions.
Embodiment 43. The secondary battery of embodiment 41 or 42, wherein the first extension flow path is formed on a second surface of the insulating element that faces the electrode assembly,
   and the second extension flow path is formed on a first surface of the insulating element that faces the cap plate.
Embodiment 44. The secondary battery of any one of embodiments 41 to 43, wherein the insulating element further comprises an exhaust portion positioned below a vent hole formed in the cap plate and having a discharge opening,
   and the second extension flow path connects the concave portion and the discharge opening.
Embodiment 45. The secondary battery of embodiment 44, wherein the second extension flow path comprises a first extension portion having a width that increases as a distance from the concave portion increases, and a second extension portion having a uniform width and connecting the first extension portion and the exhaust portion.
Embodiment 46. The secondary battery of any one of embodiments 1 to 45, wherein the concave portion comprises a bottom plate and a side surface configured to connect the bottom plate to a first surface of the insulating element that faces the cap plate,
   and the bottom plate comprises a plurality of first portions parallel to the first surface and a plurality of second portions inclined with respect to the first surface, wherein the first portions and the second portions are alternately arranged.
Embodiment 47. The secondary battery of embodiment 46, wherein a thickness of the second portion gradually decreases toward a radial outer side of the concave portion.
Embodiment 48. The secondary battery of embodiment 46 or 47, wherein the extension flow path comprises a first extension flow path formed on a second surface of the insulating element that faces the electrode assembly and a second extension flow path formed on the first surface, and the second extension flow path is connected to the second portion.

## Claims

1. A secondary battery (1000) comprising:
an electrode assembly (1200);
a casing (1100) into which the electrode assembly (1200) is inserted;
a cap (1410) coupled to the casing (1100) and comprising an electrolyte injection port (H1); and
an insulating element (1460) disposed between the cap (1410) and the electrode assembly (1200),
wherein the insulating element (1460) comprises an injection guide (1500) facing the electrolyte injection port (H1), and
the injection guide (1500) comprises:
a concave portion (1510) forming a recess in a first surface of the insulating element (1460) facing the cap (1410); and
at least one extension flow passage (1560, 1570) formed at the first surface of the insulating element (1460) and/or at a second surface of the insulating element (1460) opposite to the first surface, the extension flow passage (1560, 1570) being in fluid communication with the recess formed by the concave portion (1510) to allow an electrolyte to flow therethrough and extending away from the concave portion (1510) along the first and second surface, respectively.

2. The secondary battery (1000) of claim 1, wherein the extension flow passage (1560, 1570) is formed as a depression recessed from the first surface of the insulating element (1460) and/or as a depression recessed from the second surface of the insulating element (1460).

3. The secondary battery (1000) of claim 1 or 2, wherein a depth (T23) of the extension flow passage (1560, 1570) is 0.15 to 0.5 times a thickness (T11) of a portion of the insulating element (1460) abutting a distal end of the extension flow passage (1560, 1570) as seen from the concave portion (1510), the thickness (T11) of said portion of the insulating element (1460) and the depth of the extension flow passage (1560, 1570) being measured in a direction from the first surface of the insulating element (1460) to the second surface.

4. The secondary battery (1000) of any one of the preceding claims, wherein the extension flow passage (1560, 1570) extends away from the concave portion (1510) radially as seen from a center of the concave portion.

5. The secondary battery (1000) of any one of the preceding claims, wherein a length (L11) of the extension flow passage (1560, 1570) is smaller than a diameter (D14) of the recess formed by the concave portion (1510), in particular wherein the length (L11) of the extension flow passage (1560, 1570) is 0.15 to 0.6 times the diameter (D14) of the recess formed by the concave portion (1510).

6. The secondary battery (1000) of any one of the preceding claims, wherein the extension flow passage (1570, 2827) is formed at the first surface (2801) of the insulating element (1460, 2800), and the injection guide (1500, 2820) further comprises a connection hole (1572, 2851) extending from the extension flow passage (1570, 2827) through the insulating element (1460, 2800) toward the electrode assembly (1200).

7. The secondary battery (1000) of claim 6, wherein the connection hole (1572, 2851) is or forms part of a discharge opening (2851) formed in the insulating element (2800) and facing a vent structure (H2, 1411) formed in the cap (1410), in particular wherein the extension flow passage (2827) comprises a first portion (2827a) having a width that increases as the extension flow passage (2827) extends away from the concave portion (1510, 2821) and, optionally, a second portion (2827b) having a uniform width and connecting the first portion (2827a) of the extension flow passage (2827) and the discharge opening (2851).

8. The secondary battery (1000) of any one of the preceding claims, wherein a cross-sectional area of the recess formed by the concave portion (1510) gradually decreases toward the electrode assembly (1200).

9. The secondary battery (1000) of any one of the preceding claims, wherein the concave portion (1510) comprises at least one side hole (1530) connecting the recess formed by the concave portion (1510) and the extension flow passage (1560, 1570).

10. The secondary battery (1000) of any one of the preceding claims, wherein the concave portion (1510) comprises a bottom (1512) and a side (1515) connecting the bottom (1512) to the first surface of the insulating element (1460).

11. The secondary battery (1000) of claim 9 and 10, wherein the side hole (1530) passes through the side (1515) of the concave portion (1510),
in particular wherein the side hole (1530) comprises a first portion (1531) passing through the side (1515) of the concave portion (1510) and one or both of:
a second portion (1532) forming a depression in the second surface of the insulating element (1460) connecting to and/or forming the extension flow passage (1560); and
a third portion forming a cutout (1517) in the bottom (1512) of the concave portion (1510) recessed inward towards a center of the bottom (1512).

12. The secondary battery (1000) of claim 10 or 11, wherein the bottom (1512) of the concave portion (1510) comprises:
an inclined bottom surface (1512b) positioned between a center of the bottom (1512) and the side (1515) of the concave portion (1510) and being inclined to extend away from a surface of the cap (1410) in the direction from the center of the bottom (1512) towards the side (1515) of the concave portion (1510), said surface of the cap (1410) facing the insulating element (1460),
wherein optionally the bottom (1512) of the concave portion (1510) further comprises a flat bottom surface (1512a) parallel to said surface of the cap (1410) with the inclined bottom surface (1512b) being positioned between the flat bottom surface (1512a) and the side (1515) of the concave portion (1510).

13. The secondary battery (1000) of any one of claims 10 to 12, wherein the bottom (1512, 2212) comprises a portion (2250) having a thickness gradually decreasing toward the side (1515) of the concave portion (1510).

14. The secondary battery (1000) of any one of claims 10 to 13, wherein the bottom (2860) of the concave portion (2821) comprises at least one depression (2862) connected to a respective one of the at least one extension flow passage (2824, 2827), in particular wherein the depression (2862) is inclined so as to deepen towards the respective extension flow passage (2824, 2827).

15. The secondary battery (1000) of any one of claims 10 to 14, wherein:
the side (1515) of the concave portion (1510) is inclined with respect to a surface of the cap (1410) facing the insulating element (1460),
wherein optionally an inclination angle (K11) between the side (1515) of the concave portion (1510) and a portion of said surface of the cap (1410) abutting the side (1515) of the concave portion (1510) is 25 to 75 degrees.

16. The secondary battery (1000) of any one of claims 10 to 15, wherein a protrusion (1415) inserted into the concave portion (1510) is formed on the cap (1410), and an accommodation space (1580) is formed between the bottom (1512) of the concave portion (1510) and the protrusion (1415), the accommodation space (1580) allowing the electrolyte to flow therethrough.

17. The secondary battery (1000) of claim 16, wherein a height of the accommodation space (1580) between the protrusion (1415) and the bottom (1512) of the concave portion (1510) gradually increases in a direction from a center of the bottom (1512) toward the side of the concave portion (1510).

18. The secondary battery (1000) of claim 16 or 17, wherein a distribution space (1585) is formed between the protrusion (1415) and the side of the concave portion (1510), the distribution space (1585) being formed in an annular shape around the accommodation space and providing a fluid connection from the accommodation space (1580) towards the extension flow passage (1560, 1570), in particular wherein the distribution space (1585) is higher than the accommodation space (1580) in a direction from the bottom (1512) of the concave portion (1510) to the protrusion (1415).

19. The secondary battery (1000) of any one of claims 10 to 18, wherein the concave portion (1510) further comprises a central hole (1520) formed in the bottom (1512) of the concave portion (1510).

20. The secondary battery (1000) of claim 19, wherein a radial extent (D13) of the bottom (1512) between an outer edge of the central hole (1520) and an outer end of the bottom (1512) abutting the side (1515) of the concave portion (1510) is greater than a diameter (D12) of the central hole (1520).

21. The secondary battery (1000) of claim 19 or 20, wherein:
a first spacing protrusion (2470) is formed on a second surface of the bottom (1512) of the concave portion (1510) at an outer circumference of the central hole (2520), the second surface of the bottom (1512) facing toward the electrode assembly (1200).

22. The secondary battery (1000) of any one of claims 10 to 20, wherein:
the bottom (1512) and the side (1515) of the concave portion (1510, 2510) form a guide protrusion (1550, 2450) on the second surface of the insulating element (1460) protruding toward the electrode assembly (1200).

23. The secondary battery (1000) of claim 22, wherein the extension flow passage (1560, 1570, 2360) extends away from a base of the guide protrusion (1550, 2450) where the guide protrusion (1550, 2450) meets the second surface of the insulating element (1460).

24. The secondary battery (1000) of any one of the preceding claims, wherein the injection guide (1500, 2820) comprises a plurality of the extension flow passages (1560, 1570, 2824, 2827), in particular wherein:
the plurality of extension flow passages (1560, 1570) are distributed along an outer circumference of the concave portion (1510); and/or
the plurality of extension flow passages (2824, 2827) comprise an extension flow passage (2827) formed at the first surface (2801) of the insulating element (2800) and an extension flow passage (2824) formed at the second surface (2802) of the insulating element (2800).

25. The secondary battery (1000) of any one of the preceding claims, wherein a diameter (D14) of the recess formed by the concave portion (1510) is 1.5. to 6.5 times a diameter (D11) of the electrolyte injection port (H1).

26. The secondary battery (1000) of any one of the preceding claims, wherein the injection guide (2500) further comprises a second spacing protrusion (2570) at a distal end of the extension flow passage (1560, 1570) as seen from the concave portion (1510), the second spacing protrusion (2570) protruding from the second surface of the insulating element (1460) toward the electrode assembly (1200).

27. The secondary battery (1000) of any one of the preceding claims, wherein the insulating element (1460) further comprises a buffer protrusion (1462) protruding toward the electrode assembly (1200) and configured to support the electrode assembly (1200), in particular wherein the buffer protrusion (1462) protrudes toward the electrode assembly (1200) from an edge of the insulating element (1460).

28. The secondary battery (1000) of claim 27, wherein an outer recess (1466) is formed in the first surface of the insulating element (1460) at a portion of the insulating element (1460) formed with the buffer protrusion (1462).

29. The secondary battery (1000) of claim 27 or 28, wherein the buffer protrusion (2620) comprises a flexible portion (2650), in particular wherein the flexible portion is embodied as a flexible corrugated structure.

30. The secondary battery (1000) of any one of claim 27 to 29, wherein the buffer protrusion (2750) comprises a buffer space (2760) configured to absorb impact.
